# EUROPÄISCHE PATENTSCHRIFT

(11) **EP 0 590 342 B1**
(45) Veröffentlichungstag und Bekanntmachung des Hinweises auf die Patenterteilung: **02.08.2000**
(21) Anmeldenummer: 93114097.4
(22) Anmeldetag: 02.09.1993
(51) Int. Cl.: E01C 9/04, E01C 5/18, B29C 70/00

(54) **Verfahren zur Herstellung eines Formkörpers für eine Gleisübergangseinrichtung**
Process for manufacturing of a moulded article of a track crossing device
Procédé de fabrication d'un objet moulé pour un dispositif de traversée de rails

(30) Priorität: 02.09.1992 DE 4229289
(43) Veröffentlichungstag der Anmeldung: 06.04.1994
(73) Patentinhaber: GUMMIWERK KRAIBURG DEVELOPMENT GmbH, D-84478 Waldkraiburg (DE)
(72) Erfinder: Schmidt, Peter, D-84478 Waldkraiburg (DE); Michalkiewicz, Peter, D-84478 Waldkraiburg (DE)
(74) Vertreter: Weickmann, Heinrich, Dipl.-Ing.

(56) Entgegenhaltungen:
- EP-A- 0 281 013
- WO-A-91/15631
- CH-A- 650 541
- DD-A- 235 224
- FR-A- 2 395 353
- FR-A- 2 418 299
- GB-A- 2 221 643
- US-A- 1 689 278
- US-A- 2 126 948
- US-A- 2 454 910
- US-A- 3 324 213
- US-A- 3 378 617

## Beschreibung

Die Erfindung betrifft ein Verfahren zur Herstellung eines teilchenförmiges Altgummimaterial enthaltenden Formkörpers für die Bildung einer Verkehrsfläche, insbesondere einer Gleisübergangseinrichtung, bei dem durch Aushärten einer aushärtbaren Formmasse eine der verkehrsbelasteten Formkörperfläche nahe Schicht gebildet und in diese Schicht Hartstoffpartikel zur Erhöhung der Verkehrsflächenrauheit eingebracht werden, wobei zwischen einer ersten sich über die verkehrsbelastete Formkörperfläche erstreckenden Formgebungsfläche und einer zweiten, die jeweilige verkehrsferne Formkörperfläche erzeugenden Formgebungsfläche die Formmasse unter Druck gesetzt und ausgehärtet wird.

Eine entsprechende Gleisübergangseinrichtung ist bekannt aus der DE 40 11 599 A1 und der WO 91/15631.

Nach der DE 40 11 599 A1 und der WO 91/15631 ist zur Erzielung einer ausreichenden Traktionshaftung und auch zur Vermeidung von Rutschen der Reifen von die Gleisübergangseinrichtung befahrenden Fahrzeugen vorgesehen, daß in die verkehrsbelastete Fläche Hartstoffpartikel in Form von Spikes eingeformt oder eingeschlossen werden. Man hat die Spike-Lösung gewählt, weil man sich von ihr beste Traktions- und Rutschsicherheitseigenschaften an besonders kritischen Stellen eines Straßenverkehrsnetzes erhofft und erwartet hat. Es wurde nun gefunden, daß die Traktions- und Rutschsicherheitseigenschaften an Gleisübergängen auch dadurch wesentlich verbessert werden können, wenn zumindest ein Teil der Formkörper Hartstoffpartikel zumindest in einer der verkehrsbelasteten Fläche angrenzenden Schicht eingebunden enthält.

Es wurde gefunden, daß die Hartstoffpartikel gegenüber Spikes gerade in Gleisübergangseinrichtungen erhebliche Vorteile besitzen insofern, als sich die Höhe der Hartstoffpartikel über der jeweiligen Oberfläche der Formkörper besser an den jeweiligen Verschleißzustand anpaßt und während der ganzen Lebensdauer im statistischen Mittel ungefähr gleichbleibt. Dies führt zu gleichbleibenden Traktions- und Rutschsicherheitseigenschaften während der gesamten Einsatzdauer einer Gleisübergangskonstruktion und hat überdies den Vorteil, daß bei Gehverkehr auf der Gleisübergangskonstruktion die Gefahr eines Hängenbleibens und Stolperns reduziert ist im Vergleich zu spike-bestückten Konstruktionen.

Der Einbau von Hartstoffpartikeln in Gummiformkörper ist an sich bekannt, zum Beispiel aus der WO 89/06670 und aus der DD 235 224 A5. In beiden Fällen handelt es sich um die Hartstoffpartikelbefrachtung von Reifendeckenmaterial. Dort liegen aber insofern ganz andere Verhältnisse vor, als ein Reifen ständig in Eingriff mit einer Fahrfläche ist, während eine Gleisübergangskonstruktion nur gelegentlich befahren wird. Die Anforderungen an das Standzeit- und Betriebsverhalten sind deshalb bei einer Gleisübergangskonstruktion andere als bei einem Fahrzeugreifen.

Aus der US-PS 4 160 761 ist es auch schon bekannt, Hartstoffpartikel, nämlich Silikasand als Füllmaterial in Kunststoff-Formkörper einzubauen, die zur Belegung von Fahrzeugverkehrsflächen bestimmt sind. Auch hierbei ist nicht an die besondere Situation von Gleißübergangskonstruktionen gedacht worden.

Aus der FR-A-2 418 299 ist ein Formkörper zum Einbau in Straßenflächen bekannt, welcher als Markierung oder zur Verbesserung der Abnutzungseigenschaften der betreffenden Straßenflächen dient, jedoch keine Verbesserung der Reibungseigenschaften vorsieht.

Der Erfindung liegt die Aufgabe zugrunde, ein Verfahren der eingangs bezeichneten Art so auszuführen, daß man ohne die Notwendigkeit des nachträglichen Befestigens einzelner Spikes an der Verkehrsfläche verbesserte Traktions- und Rutschsicherheitseigenschaften der Verkehrsfläche mit einer relativ geringen Menge von Hartstoffpartikeln erhält.

Diese Aufgabe wird durch ein Verfahren der eingangs bezeichneten Art gelöst, bei dem man in die noch ausformbare Formmasse die Hartstoffpartikel dadurch einbringt, daß man zu der ersten Formgebungsfläche und der zweiten Formgebungsfläche eine der ersten Formgebungsfläche anliegende, unregelmäßig gestaltete und angeordnete Hartstoffpartikel enthaltende Streuschichtung und eine der Streuschichtung anliegende Formmasse unter Druck setzt und daß man die so in die Formmasse eingebrachten Hartstoffpartikel in der aus der Formmasse entstehenden, der verkehrsbelasteten Formkörperfläche nahen Schicht durch deren Aushärtung einbindet.

Bei diesem Verfahren kann man als Bindemittel vulkanisierbaren Rohgummi oder thermoplastische Bindemittel, insbesondere solche auf Polyolefinbasis verwenden.

Ferner können mit einer gegebenenfalls organischen Haftvermittlerschicht, insbesondere einer Kunstharzkleberschicht, beschichtete Hartstoffpartikel verwendet werden. Die Notwendigkeit einer solchen Haftvermittlerschicht hängt davon ab, ob nicht schon zwischen den Hartstoffpartikeln und den Grundbestandteilen der jeweiligen Formkörper ausreichend Haftungseigenschaften bestehen.

Als Hartstoffpartikel selbst können zum Beispiel Korundpartikel und/oder Metallkarbidpartikel und/oder Metallnitridpartikel und/oder Metalloxidpartikel verwendet werden.

Die Größe der verwendeten Hartstoffpartikel liegt bevorzugt zwischen ca. 0,5 mm und ca. 4 mm. Die hier gemachten Größenangaben beruhen auf einer Messung mittels eines Siebes von entsprechender linearer Maschenweite.

Im Hinblick auf optimale Traktions- und Rutschsicherheitseigenschaften ist beispielsweise vorgesehen, daß die Hartstoffpartikel derart eingebunden werden, daß sie im Neuzustand, jedenfalls aber nach kurzem Gebrauch, an der verkehrsbelasteten Fläche freiliegen und/oder aus dieser herausragen.

Im Hinblick auf eine möglichst gute Haftung der Hartstoffpartikel an der verkehrsbelasteten Fläche ist es von Vorteil, wenn man die Hartstoffpartikel mit einem organischen, aushärtbaren Haftvermittler versieht und die Hartstoffpartikel in die Formmasse in einem Zustand einbringt, in dem der Haftvermittler noch zur Einbindung in die Formmasse geeignet ist.

Zur Durchführung des erfindungsgemäßen Verfahrens kann vorgesehen sein, daß man die Hartstoffpartikel einem teilchenförmigen Altgummimaterial zusetzt, dieses sodann mit einem erhärtbaren Bindemittel mischt, das so erhaltene Gemisch zu dem Formkörper oder zumindest zu der der verkehrsbelasteten Fläche nahen Schicht ausformt und das Bindemittel aushärten läßt. Nach einer Alternative in der Ausführung dieser Lehre ist vorgesehen, daß man die Hartstoffpartikel einem Bindemittel beimischt, dieses sodann mit einem teilchenförmigen Altgummimaterial mischt, das so erhaltene Gemisch ausformt und das Bindemittel sodann aushärten läßt.

Auch der zeitliche Ablauf des Verfahrens ist in vielfacher Weise abwandelbar.

So ist es zum Beispiel möglich, daß man eine Formmasse zu dem Formkörper oder einer der verkehrsbelasteten Fläche des Formkörpers nahen Schicht ausformt, die verkehrsbelastete Fläche sodann mit den Hartstoffpartikeln bestreut und den Formkörper bzw. die Schicht sodann aushärten läßt. Bei diesem Verfahrensablauf kann man zur Haftungsverbesserung zwischen den Hartstoffpartikeln und der Formmasse vorsehen, daß man die Hartstoffpartikel nach dem Aufstreuen in eine der verkehrsbelasteten Fläche nahe Schicht eindrückt und diese Schicht sodann aushärten läßt. Um bei einer solchen Verfahrensweise mit möglichst geringem Verlust an Hartstoffpartikeln auszukommen, kann man nach dem Aufstreuen der Hartstoffpartikel, gegebenenfalls auch nach dem Eindrücken der Hartstoffpartikel in die verkehrsbelastete Fläche, den nicht gebundenen Anteil der aufgestreuten Hartstoffpartikel abkehren.

Ein vom Rohstoffeinsatz her vorteilhaftes Verfahren besteht darin, daß man einen aus teilchenförmigem Altgummimaterial und vulkanisierbarer Rohgummimischung bestehenden Kernbereich eines Formkörpers mit einer Schicht aus vulkanisierbarem Rohgummi beschichtet, so daß die Schicht aus vulkanisierbarem Rohgummi die verkehrsbelastete Fläche bildet, daß man sodann auf die verkehrsbelastete Fläche die Hartstoffpartikel aufstreut und diese gewünschtenfalls in die verkehrsbelastete Fläche eindrückt und daß man sodann die vulkanisierte Rohgummimischung in dem Kernbereich und in der der verkehrsbelasteten Fläche nahen Schicht gemeinsam vulkanisiert.

Will man Formkörper erzeugen, deren verkehrsbelastete Fläche neben Hartstoffpartikeln auch eine traktions- und rutschsicherheitserhöhende Flächenprofilierung besitzt, so kann man in der Weise vorgehen, daß man eine Unterform verwendet, weiche eine vertikal nach oben gerichtete Bodenfläche besitzt und auf dieser Bodenfläche nach oben gerichtete Vorsprünge, daß man auf diese Bodenfläche sodann Hartstoffpartikel aufstreut derart, daß sich diese Hartstoffpartikel im wesentlichen zwischen den Vorsprüngen auf der Bodenfläche ansammeln und daß man in die Unterform sodann eine aushärtbare Formmasse einbringt und diese aushärtet. Dabei kann man die Konzentration der Hartstoffpartikel auf die erhabenen Bereiche der verkehrsbelasteten Fläche noch dadurch erhöhen, daß man die Unterform einer Rüttelbewegung unterwirft, so daß sich die Hartstoffpartikel bevorzugt in den Bereichen außerhalb der Vorsprünge ansammeln.

Im einzelnen kann man bei dem auf Einstreuen der Hartstoffpartikel in den Boden einer Unterform beruhenden Verfahren so vorgehen, daß man auf den Boden der Unterform über den eingestreuten Hartstoffpartikeln zunächst eine Bindemittelschicht aufträgt und über dieser Bindemitteischicht eine Mischung von Bindemitteln und teilchenförmigem Altgummimaterial aufträgt und dieses Bindemittel gleichzeitig mit dem Bindemittel der Bindemittelschicht zur Erhärtung bringt. Die Formmasse kann dann innerhalb der Unterform durch Einführen einer Oberform unter Druck gesetzt werden.

Erfindungsgemäß ist bei der Ausführung des Verfahrens bevorzugt vorgesehen, daß man eine Unterform dergestalt verwendet, daß der jeweilige Formkörper in seiner verkehrsbelasteten Fläche Einsenkungen erhält und daß die Konzentration der Hartstoffpartikel im Bereich dieser Einsenkungen geringer ist als in Oberflächenbereichen der verkehrsbelasteten Fläche außerhalb dieser Einsenkungen. Durch die Einbringung solcher Einsenkungen können die Traktions- und Rutschsicherheitseigenschaften noch weiter gesteigert werden. Dadurch, daß man die Hartstoffpartikel im wesentlichen auf die Oberflächenbereiche der verkehrsbelasteten Fläche außerhalb der Einsenkungen beschränkt, kann bei einer gegebenen Menge von Hartstoffpartikeln das Traktions- und Rutschsicherheitsverhalten noch verbessert werden.

Bei der verwendeten Unterform können die Einsenkungen beispielsweise als Rinnen ausgebildet werden. Diese Rinnen können auch Wasserabführungsfunktionen übernehmen. Diese Wasserabführungsfunktion wird durch eine Verwendung einer Unterform dergestalt wesentlich verbessert, daß die Begrenzungsflächen der Rinnen von aufrauhenden Hartstoffpartikeln im wesentlichen frei werden.

Im Hinblick auf die Wasserabführungsfunktion der Rinnen wird eine Verwendung einer Unterform dergestalt empfohlen, daß die Rinnen in Umrandungsflächen des Formkörpers ausmünden.

Durch eine Verwendung einer geeigneten Unterform können die Rinnen ferner im wesentlichen geradlinig über die verkehrsbelastete Fläche verlaufen. Eine bevorzugte Ausführungsform sieht eine Verwendung einer Unterform dergestalt vor, daß mehrere, vorzugsweise zwei Scharen von in der jeweiligen Schar zueinander parallelen Rinnen vorgesehen werden, wobei sich die Rinnen der einzelnen Scharen kreuzen. In dem Fall entstehen rautenförmige erhabene Oberflächenbereiche. Sind die Diagonalen der Rauten unterschiedlich lang, so kann man wahlweise die kurzen oder die langen Rautendiagonalen in Fahrtrichtung legen. Dies hängt von der zu erwartenden Verkehrsart ab. Wird zum Beispiel in hohem Maße ein Fahrradverkehr erwartet, so empfiehlt es sich, die langen Diagonalen der Rauten quer zur allgemeinen Fahrtrichtung zu legen, um das Lenkverhalten der Fahrräder nicht ungünstig zu beeinflussen.

Um nach dem Einbauen der Formkörper in eine Verkehrsfläche deren traktions- und rutschsicherheitsverbessernde Eigenschaften sofort optimal verfügbar zu machen, kann man die verkehrsbelastete Fläche des Formkörpers nach dem Aushärten der aushärtbaren Formmasse einer Aufrauhbehandlung unterwerfen, um die Spitzen und Kanten möglichst vieler Hartstoffpartikel freizulegen. Beispielsweise ist es möglich, daß die Aufrauhbehandlung mittels mindestens einer Metalldrahtbürste, insbesondere mittels einer rotierenden Metalldrahtbürste, durchgeführt wird.

Man kann die Aufrauhbehandlung dadurch erleichtern und effektiver gestalten, daß man vor der Aushärtung der verkehrsbelasteten Fläche des Formkörpers in diese ein Aufrauhhilfsmittel einbringt, welches zu den Hartstoffpartikeln und zu der ausgehärteten Formmasse ein geringeres Haftvermögen besitzt als die Hartstoffpartikel zu der ausgehärteten Formmasse und daß man dieses Aufrauhhilfsmittel nach dem Aushärten der Formmasse gewünschtenfalls wenigstens teilweise entfernt. Die Einbringung des Aufrauhhilfsmittels kann auch dann mit Vorteil angewandt werden, wenn eine gezielte Aufrauhbehandlung gar nicht durchgeführt wird. Es hat sich nämlich gezeigt, daß beim Einbau des Aufrauhhilfsmittels in die verkehrsbelastete Fläche der Formkörper die erwünschte Aufrauhung sehr rasch durch den Verkehr selbst bewirkt werden kann. Nur wenn man besonders gleichmäßige und intensive Oberflächenrauhigkeit bereits unmittelbar nach dem Einbau der Formkörper fordert, wird man zweckmäßig eine gezielte Aufrauhbehandlung vor oder unmittelbar nach dem Einbau der Formkörper vornehmen.

Bei den auf Einstreuen der Hartstoffpartikel in den Boden einer Unterform beruhenden Verfahren kann man das Aufrauhhilfsmittel vor oder gleichzeitig mit den Hartstoffpartikeln auf den Boden der Unterform aufbringen.

Die beiliegenden Figuren erläutern die Ausführungsbeispiele der Erfindung; es stellen dar:
- Fig. 1: eine Gleisübergangseinrichtung nach einer ersten Ausführungsform;
- Fig. 2: eine Draufsicht zu Fig. 1;
- Fig. 3: einen Schnitt nach Linie III - III der Fig. 2 beim Einbringen der Mittelplatten zwischen zwei Schienen;
- Fig. 4: einen Schnitt entsprechend demjenigen nach Fig. 3 nach Fertigstellung anschließender Straßendeckenabschnitte;
- Fig. 5: eine Ansicht einer Stoßstelle zwischen in Schienenlängsrichtung aufeinanderfolgenden Platten;
- Fig. 6: einen Schnitt durch eine Platte mit Deckhaut;
- Fig. 6a: eine Vergrößerung bei VIa der Figur 6;
- Fig. 7: die Zusammenfügung von in Schienenlängsrichtung aufeinanderfolgenden Mittelplatten;
- Fig. 8: einen Schnitt durch eine zweite Ausführungsform einer Gleisübergangseinrichtung;
- Fig. 9: einen Schnitt nach Linie IX - IX der Fig. 8;
- Fig. 10: das Schema einer Anlage zur Herstellung von Formkörpern mit Deckhaut;
- Fig. 11: den Schnitt durch eine Vulkanisierform zur Herstellung von Formkörpern mit Deckhaut und
- Fig. 12: eine Anlage zur Herstellung von Formkörpern mit thermoplastischem Bindemittel und ohne Deckhaut.
- Fig. 13 - 16: den Arbeitsablauf bei einer weiteren Anlage zur Herstellung von Formkörpern;
- Fig. 15a: ein Detail zu Fig. 15 und
- Fig. 17: einen entsprechend den Fig. 13 - 16 hergestellten Formkörper.
- Fig. 18: das Schema einer Aufrauhbehandlung.

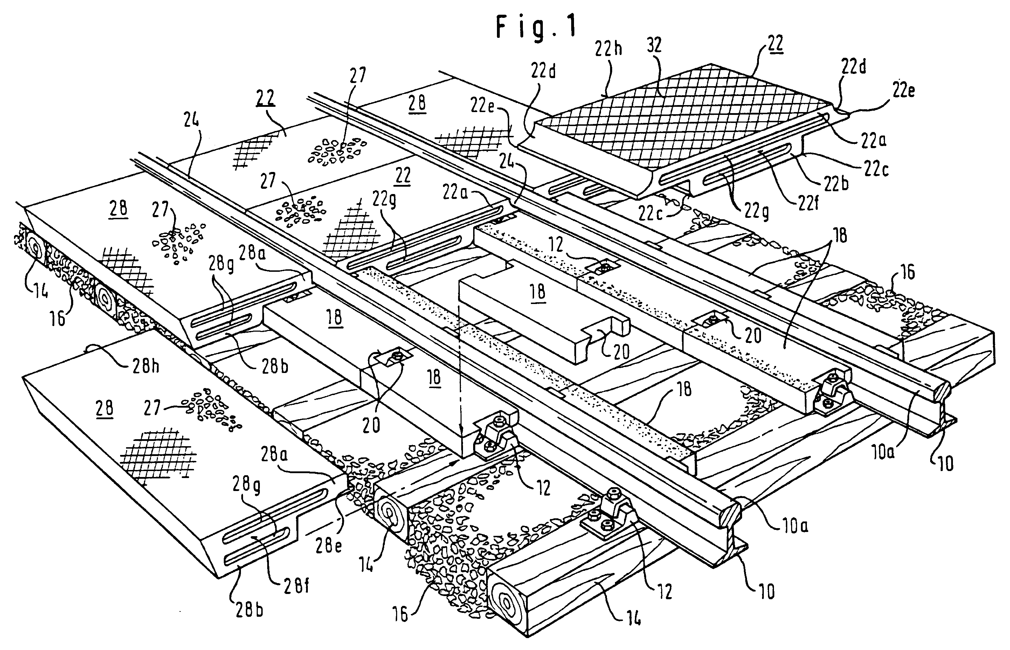

In Fig. 1 sind die beiden Eisenbahnschienen einer Gleisanlage mit 10 bezeichnet. Diese Eisenbahnschienen 10 sind durch Klemmvorrichtungen 12 auf Schwellen 14 verlegt. Die Schwellen 14 sind in einem Schotterbett 16 verlegt, das jeweils zwischen zwei aufeinanderfolgenden Schwellen durch Stopfen verdichtet ist. Die Schienen 10 und die Schwellen 14 bilden einen Gleisrost. Das Bettungsmaterial 16 liegt annähernd bündig mit den oberen Flächen der Schwellen 14.

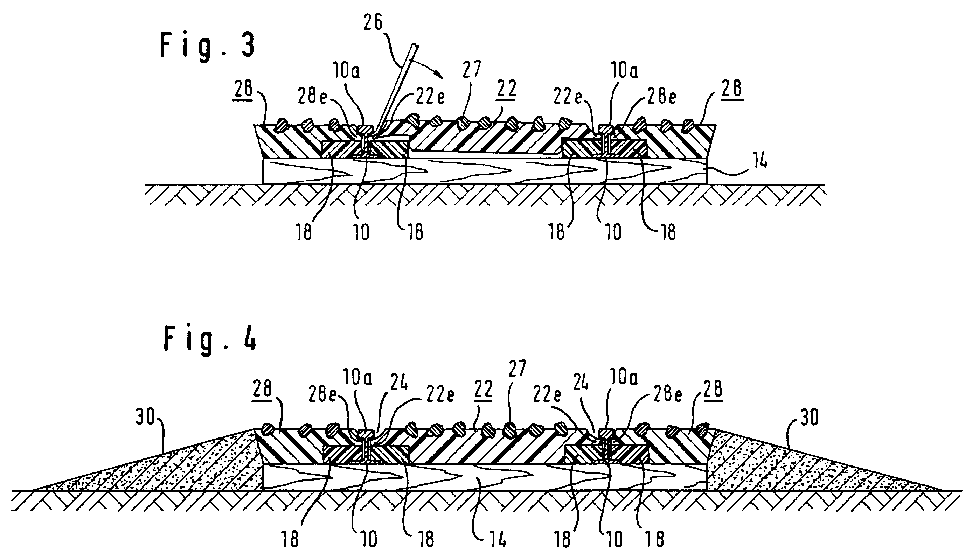

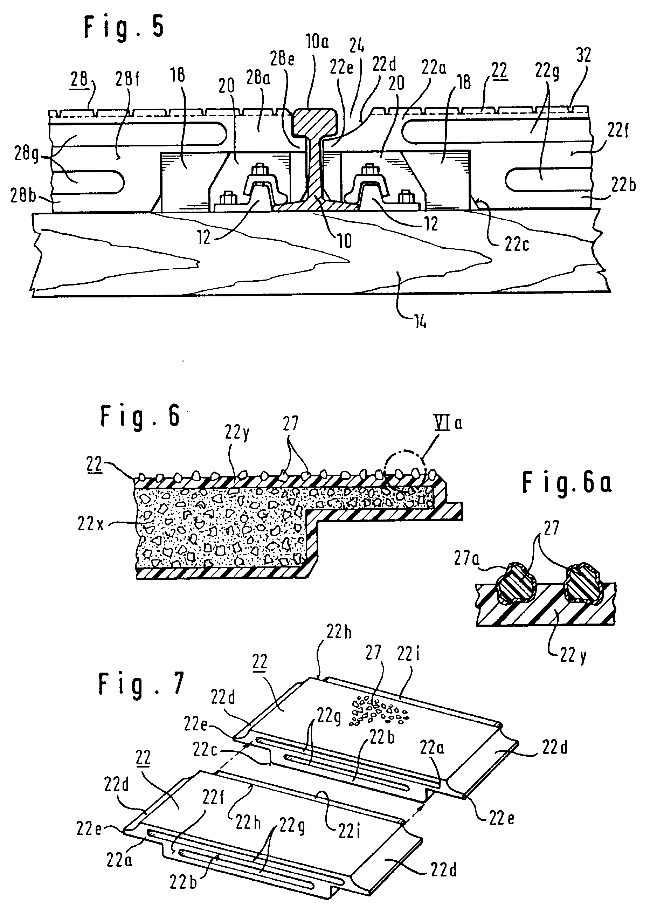

Beidseitig jeder Schiene 10 sind sog. Schienenformstücke 18 auf den Schwellen verlegt. Diese Schienenformstücke weisen an beiden Enden jeweils eine Halbausnehmung 20 auf. Die Halbausnehmungen 20 sind so bemessen, daß zwischen den beiden Halbausnehmungen zweier aufeinanderfolgender Schienenformstücke 18 jeweils eine Klemmvorrichtung 12 Platz findet. Zwischen den beiden Schienen 10 liegen auf den Schienenformstücken 18 Mittelplatten 22 auf. Diese Mittelplatten haben im wesentlichen T-förmigen Querschnitt mir einem Querschenkel 22a und einem Mittelschenkel 22b. Die Mittelschenkel 22b finden Platz zwischen den Schienenformstücken 18 und sind bei 22c so abgeschrägt, daß sie leicht zwischen die einander gegenüberliegenden Schienenformstücke 18 eingeschoben werden können. Der Querschenkel 22a ist an seinen Längskanten bei 22d so abgeschrägt oder abgekehlt, daß Vorsprünge 22e gebildet sind, welche auf den Schienenformstücken 18 aufliegend unter die Schienenköpfe 10a eingreifen. Dabei werden zumindest an den Innenseiten der Schienen Freiräume 24 für die Spur kränze der Schienenlaufräder (nicht eingezeichnet) gebildet. Die Mittelplatten 22 sind an jeweils einer Endfläche 22f mit Nuten 22g versehen und an der gegenüberliegenden Endfläche 22h mit komplementären Rippen, wie dies im einzelnen in Fig. 7 dargestellt ist. Die Rippen sind mit 22i bezeichnet. Die Mittelschenkel 22 b liegen auf dem Bettungsmaterial auf.
Das Einlegen der Mittelplatten 22 erfolgt in der Weise, daß zunächst die Vorsprünge 22e der jeweils einen Längsseite unter die zugehörigen Schienenköpfe 10a eingeschoben werden, und daß hierauf mittels eines Montiereisens 26 die Vorsprünge 22e der anderen Längsseite unter die zugehörigen Schienenköpfe 10a eingezwängt werden, wie in Fig. 3 dargestellt. Ist dieses Einzwängen beendet, so nehmen die Mittelplatten 22 die in Fig. 4 gezeigte Stellung ein. Dann können in Schienenlängsrichtung aufeinanderfolgende Mittelplatten 22 zusammengeschoben werden, so daß die Rippen 22i einer Mittelplatte 22 jeweils in die Nuten 22g der nächstfolgenden Mittelplatte eindringen und eine praktisch stoßfreie und dichte Verbindung zwischen aufeinanderfolgenden Mittelplatten besteht. Die Mittelplatten liegen dann zwischen den beiden Schienen im wesentlichen ohne Zwang, sind aber durch die Schienenköpfe 10a gegen Abheben von dem Gleisrost gesichert. Die Unterseiten der Mittelschenkel 22b liegen auf den Schwellen 14 und dem Bettungsmaterial 16 auf. Das Zusammenschieben aufeinanderfolgender Mittelplatten 22 kann mit Hilfe von Bandeisen erfolgen, die an der Unterseite der Mittelplatten 22 auf den Schwellen 14 verlegt werden. An diesen Bandeisen werden einendig jeweils ein Widerlager und anderendig jeweils ein Kraftgerät angesetzt, so daß durch Betätigung des Kraftgeräts die Mittelplatten in Längsrichtung der Schienen 10 gegeneinander gedrückt werden.

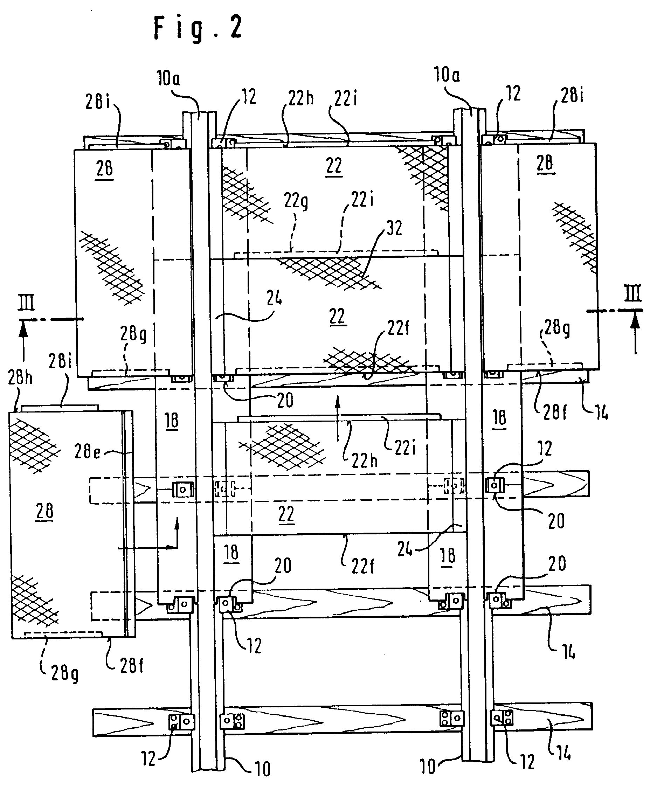

Weiterhin sind Außenplatten 28 vorgesehen, welche ebenfalls Vorsprünge 28e zum Untergreifen der Schienenköpfe 10a aufweisen und im wesentlichen L-förmige Gestalt haben mit einem horizontalen Schenkel 28a, der zur Auflage auf den Schienenformstücken 18 bestimmt ist und einem vertikalen Schenkel 28b, der zur Auflage auf den Schwellen 14 und dem Bettungsmaterial 16 bestimmt ist. Die Außenplatten 28 sind wiederum mit Nuten 28g an jeweils einer Endfläche 28f und mit entsprechenden Rippen 28i an der jeweils gegenüberliegenden Endfläche 28h ausgeführt (siehe Fig. 2), so daß sie genauso zusammengeschoben werden können wie die Mittelplatten.

Zur Erleichterung des Zusammenbaus werden die Oberseiten der Schienenformstücke 18 vor dem Auflegen der Mittelplatten 22 und der Außenplatten 28 mit Schmierseife gleitfreudig gemacht.

Die Außenplatten 28 werden, wie aus Fig. 4 ersichtlich, durch anschließende Fahrbahnkörper 30 in ihrer Lage gehalten.

In Fig. 5 erkennt man eine Stoßstelle zwischen aufeinanderfolgenden Mittelplatten 22 und Außenplatten 28.

Fig. 1 und 5 lassen erkennen, daß die befahrenen oberen Flachen der Mittelplatten und Außenplatten mit einer rautenförmigen Profilierung 32 versehen sind.

In Fig. 6 erkennt man einen Querschnitt durch eine Mittelplatte 22, der etwa nach Linie III - III der Fig. 2 gewonnen ist. Diese Mittelplatte besteht aus einem Kernbereich 22x und einer Deckhaut 22y. Der Kernbereich 22x ist dabei aus einem teilchenförmigen Altgummimaterial hergestellt, wobei die Teilchen durch vulkanisiertes Rohgummimaterial aneinander gebunden sind. Die Deckhaut 22y besteht ebenfalls aus vulkanisiertem Rohgummimaterial. Die Deckhaut 22y ist mit dem Kernbereich 22x zusammen vulkanisiert.

In Figur 1 erkennt man, daß in den verkehrsbelasteten Flächen der Außenplatten 28 und der Mittelplatten 22 Hartstoffpartikel 27 eingebettet sind. Diese Hartstoffpartikel sind in der Zeichnung nur zur besseren Darstellung über kleinere Flächenbereiche verteilt, in Wirklichkeit sind die Hartstoffpartikel über jeweils die gesamte verkehrsbelastete Fläche verteilt.

In den Figuren 3 und 4 erkennt man die Hartstoffpartikel 27 wieder, wobei jedoch eine maßstäbliche Verzerrung vorliegt. In Wirklichkeit sind die Hartstoffpartikel 27 viel kleiner. Auf die Größe der Hartstoffpartikel wird später noch eingegangen.

In Figur 6 erkennt man, daß die Hartstoffpartikel 27 ausschließlich in der verkehrsbelasteten Deckhaut 22y enthalten sind. In Figur 6a ist eine vergrößerte Darstellung der verkehrsbelasteten Deckhaut 22y zu erkennen und auch eine vergrößerte Darstellung der Hartstoffpartikel 27. Diese Hartstoffpartikel 27 sind mit einer Haftvermittlerschicht 27a versehen, welche die Haftung der Hartstoffpartikel 27 an der Deckhaut 22y verbessert. Auch in Figur 7 erkennt man die Hartstoffpartikel 27.

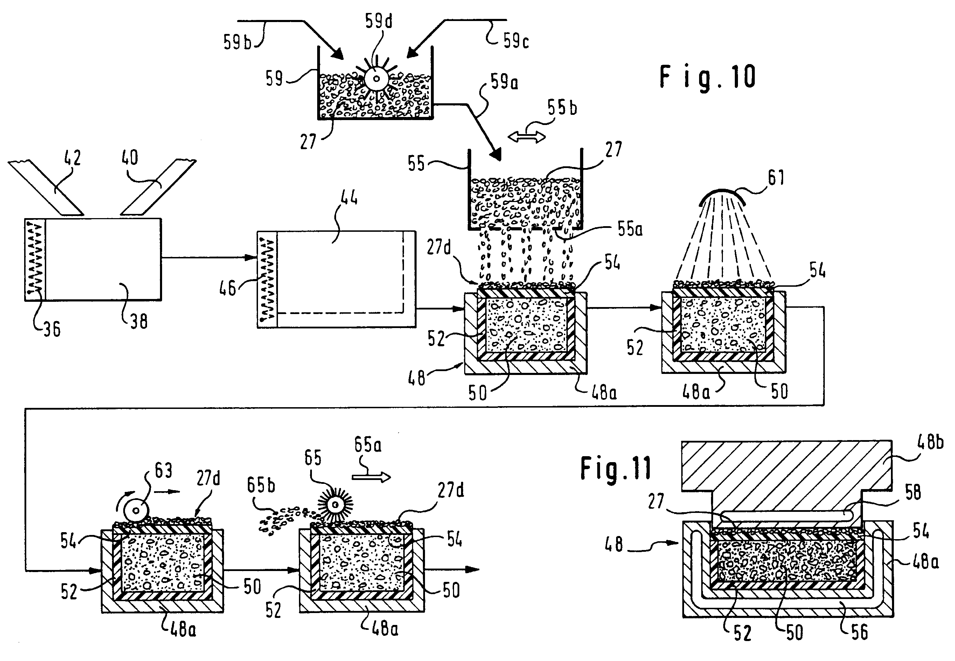

Die Herstellung einer Mittelplatte, wie sie in Fig. 6 dargestellt ist, kann etwa so erfolgen, wie nachstehend anhand von Fig. 10 und 11 beschrieben.

In einen mit einer Beheizungsvorrichtung 36 ausgerüsteten Mischer 38, etwa einen Schneckenmischer, wird durch eine Beschickungsvorrichtung 40 teilchenförmiges Altgummimaterial eingegeben, das durch Zerkleinern von Reifendeckenabfällen gewonnen worden ist und ein Teilchengrößenspektrum besitzt, dessen größte Teilchen eine maximale lineare Ausdehnung von ca. 7 mm besitzen. Gleichzeitig wird in den Mischer 38 durch eine weitere Beschickungsvorrichtung 42 vulkanisierbares Rohgummimaterial zugeführt, beispielsweise in Granülenform. Dem Rohgummimaterial sind bereits Vulkanisationsmittel, wie Schwefel, und Verarbeitungshilfsmittel zugesetzt. Alternativ können die Vulkanisationshilfsmittel und die Verarbeitungshilfsmittel auch gesondert dem Mischer zugeführt werden. Die in dem Mischer erhaltene Mischung hat eine Temperatur, die bereits ausreichend ist, um später bei entsprechender Druckeinwirkung eine Vulkanisation zu bewirken. Diese heiße Mischung wird laufend einem Isolierbehälter 44 zugeführt, der mit einer Beheizungsvorrichtung 46 ausgestattet sein kann. In dem Isolierbehälter bleibt die Temperatur der Mischung erhalten oder wird ggf. noch erhöht. Sobald in dem Isolierbehälter eine der jeweils zu bildenden Mittelplatten ausreichende Mischgutmenge enthalten ist, wird der Inhalt des Isolierbehälters in eine Form 48 übertragen, z. B. durch Kippen des Isolierbehälters 44.

In Fig. 11 ist die Form 48 im einzelnen dargestellt; sie besteht aus einer Unterform 48a und einer Oberform 48b. Vor dem Einbringen der Mischung 50 wird die Unterform 48a mit einer Schicht 52 von vulkanisierbarem Rohgummi ausgekleidet. Dieser vulkanisierbare Rohgummi enthält bereits die notwendigen Vulkanisationsmittel und Verarbeitungshilfsmittel; beispielsweise hat das Schichtmaterial cine plastilinartige Konsistenz, so daß es sich leicht an die Innenwände der Unterform 48a anlegen läßt. In die durch das Schichtmaterial 52 gebildete Mulde wird sodann die Mischung 50 aus dem Isolierbehälter 44 eingefüllt. Hierauf wird eine weitere Schicht 54 von vulkanisierbarem Rohgummi über die Mischung 50 gebreitet. Die Schicht 54 wird dicht an die Schicht 52 angeschlossen, ggf. mit Überlappung etwa in der Weise, daß die oberen Ränder der Schicht 52 über die Schicht 54 geklappt werden.

Anschließend wird über die Unterform 48a ein Verteiler 55 gebracht, welcher einen Siebboden 55a aufweist. In diesen Verteiler werden Hartstoffpartikel 27 eingebracht. Die Hartstoffpartikel werden aus einem Mischbehälter 59 über eine Zuführung 59a zugeführt. Der Mischbehälter 59 hat zwei Zuleitungen 59b und 59c. Durch die Zuleitung 59b werden die Hartstoffpartikel 27 in den Mischbehälter 59 eingeführt. Durch die Zuleitung 59c wird ein Haftvermittler in flüssiger Form zugeführt. In dem Mischbehälter 59 ist ein Rührwerk 59d enthalten, welches die Hartstoffpartikel mit dem Haftvermittler vermischt, so daß sich auf der Oberfläche der Hartstoffpartikel eine Haftvermittlerschicht 27a bildet, wie in Figur 6a dargestellt. Die mit Haftvermittler oberflächenbeschichteten Hartstoffpartikel gelangen dann über die Zuführung 59a in den Verteiler 55 der in Pfeilrichtung 55b so gerüttelt wird, daß die Hartstoffpartikel 27 durch den Siebboden 55a auf die Schicht 54 fallen. Die Haftmittelbeschichtung 27a der Hartstoffpartikel 27 kann auf dem Weg von dem Mischbehälter 59 in den Verteiler 55 so weit ausgehärtet werden,daß ein Haften an dem Verteiler 55 und an dem Siebboden55a nicht mehr eintritt, gleichwohl aber noch ausreichendes Haftvermögen zum Anhaften an der plastilinförmigen Schicht 54 besteht. Damit bildet sich auf der Schicht 54 eine Lage 27d von Hartstoffpartikeln.

Über die Unterform 48a wird dann ein Infrarotstrahler 61 gebracht, welcher die Lage 27d und die Schicht 54 soweit erwärmt, daß eine erhöhte Haftung der Hartstoffpartikel 27 an der Schicht 54 begünstigt wird.

In einer weiteren Station wird dann eine Eindrückwalze 63 über die Unterform 48a gebracht. Diese Walze drückt die Lage 27d von Hartstoffpartikeln 27 teilweise in die Schicht 54 ein. Dabei wird ein Großteil der Hartstoffpartikel 27 in die Schicht 54 eingebunden. Ein Rest bleibt jedoch im wesentlichen lose auf den eingebundenen Partikeln 27 liegen. Um diesen Rest wiedergewinnen zu können und nicht auf dem Weg zur Einbaustelle unter Verschmutzung der Umgebung zu verstreuen, wird sodann in einer weiteren Station über die Unterform 48a eine Kehrwalze 65 gebracht, die in Pfeilrichtung 65a über die Lage 27d hinwegfährt und die losen oder nur leicht anhaftenden Hartstoffpartikel abkehrt und in einem Teilchenstrahl 65b einem nicht dargestellten Auffangbehälter zuführt.

Anschließend wird die Oberform 48b gegen die Unterform 48a gepreßt. Die Unterform 48a ist mit einer Heizvorrichtung 56 ausgerüstet. Eine weitere Heizvorrichtung 58 ist in der Oberform 48b vorgesehen. In der Form 48 wird nunmehr sowohl der Rohgummianteil der Mischung 50 als auch der Rohgummi der Schichten 52 und 54 vulkanisiert. Dabei steht für die Vulkanisation der Mischung 50 die Wärme zur Verfügung, die mit der Mischung in die Unterform 48a eingebracht worden ist, während die Vulkanisationswärme für die Schichten 52 und 54 von den Heizvorrichtungen 56 und 58 her durch die Formraum-Begrenzungswände übertragen wird. Durch die Vulkanisation der Mischung 50 entsteht eine Matrix von Vulkanisationsrohgummi, in welcher die Teilchen des bereits früher vulkanisierten Altgummimaterials einzeln oder gruppenweise eingeschlossen sind. Die Schichten 52 und 54 werden ebenfalls vulkanisiert und gehen als Folge der Vulkanisation eine festhaftende Stoffverbindung mit der Mischung ein. Auf diese Weise entsteht aus der Mischung 50 der Kernbereich 22x gemäß Fig. 6 und aus den Rohgummischichten 52 und 54 die Deckhaut 22y der Fig. 6.

Bei der Vulkanisation werden die Hartstoffpartikel 27 in die Schicht 54 einvulkanisiert, wobei Haftvermittlerschichten 27a - soweit noch nicht geschehen - ebenfalls ausgehärtet werden können und einen innigen chemischen oder physikalischen Verbund sowohl mit den Hartstoffpartikeln 27 als auch mit der Schicht 54 eingehen.

Nach Beendigung des Vulkanisationsvorgangs kann der Formkörper aus der Form 48 entnommen und abgekühlt werden. Er ist dann gebrauchsfertig.

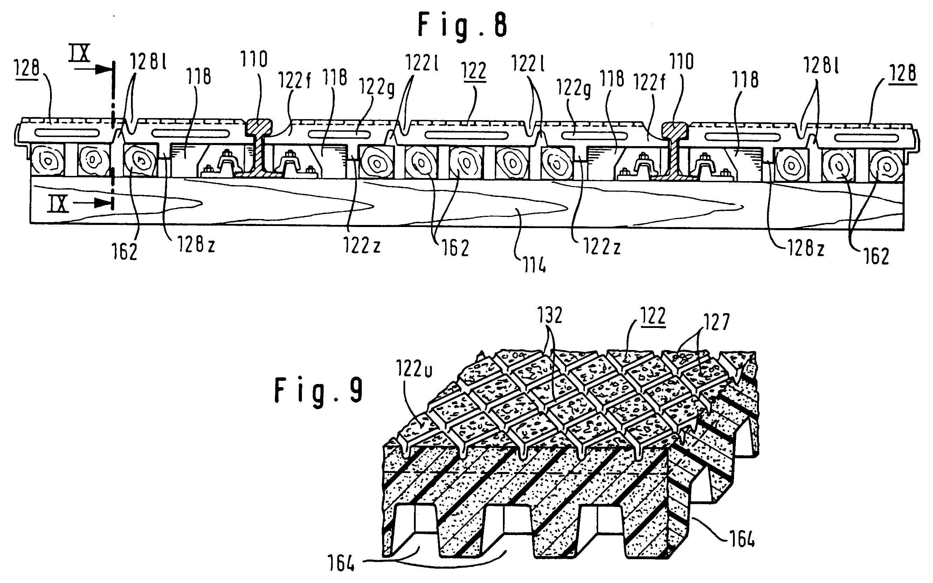

In den Fig. 8 und 9 ist eine weitere Ausführungsform einer Gleisübergangseinrichtung dargestellt. In dieser Ausführungsform sind die Mittelplatten 122 mit geringerer Plattenstärke ausgeführt als in der Ausführungsform nach den Fig. 1 - 7. Die Mittelplatten 122 liegen auf Längshölzern 162 auf, die ihrerseits auf Schwellen 114 verlegt sind. Ebenso liegen die Außenplatten 128 auf Längshölzern 162 auf. Die verkehrsbelasteten Oberflächen der Mittelplatten 122 sind mit einem Rautenmuster 132 versehen.
Die Endflächen 122f sind auch hier mit Nuten 122g versehen, denen Rippen an den jeweils gegenüberliegenden nicht eingezeichneten Endflächen entsprechen. Der Eingriff der Mittelplatten 122 und der Außenplatten 128 in die Schienen 110 ist genauso wie in der Fig. 1. Im Bereich der Schienen liegen auch hier Schienenformstücke 118, die ähnlich oder identisch gestaltet sind wie in Fig. 1. Die Mittelplatten 122 und die Außenplatten 128 sind mit Zentrierleisten 122z bzw. 128z ausgeführt, welche an den Schienenformstücken 118 anliegen. Die Mittelplatten 122 und die Außenplatten 128 sind mit Längsnuten 122l bzw. 128l ausgeführt, welche bei Wärmeausdehnung eine Entlastung bewirken und außerdem den Einbau der Mittelplatten 122 nach der Methode der Fig. 3 erleichtern. An der Unterseite der Platten 122 und ebenso der Außenplatten 128 können Ausnehmungen 164 vorgesehen sein, welche zu einer Gewichtsminderung führen.

Die Ausführungsform nach Fig. 8 und 9 ist in den Herstellungskosten günstiger als die Ausführungsform nach den Fig. 1 - 7, weil die Platten 122 und 128 weniger Material erfordern. Der Materialaufwand für die Längshölzer 162 ist dabei geringer als der Materialaufwand für die dickeren Platten. Die Ausführungsform nach Fig. 8 und 9 ist insbesondere für Gleisübergangseinrichtungen bestimmt, die nur von Fußgängern und leichten Fahrzeugen benutzt werden.

Die Ausnehmungen 164 gemäß Fig. 9 können auch in den Platten gemäß Fig. 1 - 7 angewandt werden.

Die Platten 122 und 128 gemäß Fig. 8 und 9 bestehen aus einem teilchenförmigen Altgummimaterial mit einem Größenspektrum, dessen größte Teilchen in der Größenordnung von 1 - 2 mm linearer Ausdehnung liegen. Diese Teilchen sind in einer thermoplastischen Bindemasse gebunden. Eine Deckhaut ist hier nicht erforderlich. Die Kleinheit der Teilchen sorgt hier dafür, daß im wesentlichen geschlossene Oberflächen erzielt werden, wobei etwa durch die Oberfläche tretende Altgummiteilchen die Oberflächenstruktur im Sinne einer verringerten Rutschfestigkeit verbessern.

In Figur 9 erkennt man, daß in der verkehrsbelasteten Oberfläche 122u Hartstoffpartikel 127 eingebettet sind. Es kann deshalb auf die in Figur 9 dargestellte Profilierung unter Umständen auch verzichtet werden und die Haftung zu dem Reifen eines die verkehrsbelastete Oberfläche befahrenden Fahrzeugs allein den Hartstoffpartikeln 127 überlassen werden.

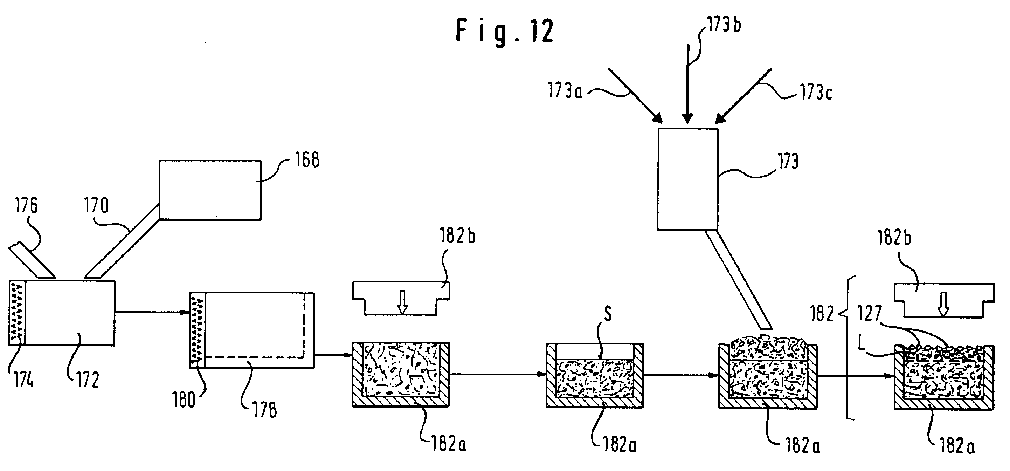

Die Platten 128 können genauso ausgebildet sein wie die Platten 122 der Figur 9. Die Herstellung der Platten 122 und 128 erfolgt so wie in Figur 12 schematisch dargestellt.

In Fig. 12 ist mit 168 eine Häkselvorrichtung bezeichnet, in welcher thermoplastische Abfallfolien zu Häkselgut unter Erwärmung verarbeitet werden. Die gehäkselten Folienteilchen haben eine größte lineare Ausdehnung von ca. 15 mm. Das Häkselgut wird durch die mechanische Energie des Häkselvorgangs erwärmt. Das erwärmte Häkselgut gelangt durch einen Zulauf 170 in einen Schneckenmischer 172, der ebenfalls mit einer Beheizungsvorrichtung 174 ausgerüstet sein kann. Durch einen weiteren Zulauf 176 gelangt teilchenförmiges, vulkanisiertes Altgummimaterial in den Schneckenmischer 172. Das Teilchengrößenspektrum des vulkanisierten Altgummimaterials ist so, daß die größten vorkommenden Teilchen eine lineare Größe von ca. 1 - 2 mm haben. Das Mischungsverhältnis von thermoplastischer Abfallfolie und vulkanisierten Altgummiteilchen ist ca. 50 : 50 Gewichtsanteile. Das thermoplastische Altfolienmaterial besteht beispielsweise aus Polyethylen. In dem Schneckenmischer 172 wird eine Temperatur erreicht, die über dem Thermoplastifizierungspunkt des jeweiligen thermoplastischen Materials liegt. Von dem Schneckenmischer 172 gelangt das Mischgut in einen Isolierbehälter 178, der seinerseits mit einer Beheizungsvorrichtung 180 ausgerüstet sein kann. Wenn in dem Isolierbehälter 178 ausreichend Mischgut enthalten ist, um eine Form zur Herstellung beispielsweise einer Mittelplatte 122 zu füllen, so wird das Mischgut in eine Unterform 182a geschüttet und dann durch eine Oberform 182b vorgepreßt.

Damit sinkt in der Unterform 182a der Spiegel S des Mischguts bis unter den oberen Formrand der Unterform 182a ab. Nunmehr kann aus einem weiteren Schneckenmischer 173 ggf unter Zwischenschaltung eines weiteren Vorratsbehälters zusätzliches Mischgut in die Unterform 182a eingeführt werden, bis die Unterform 182a wieder annähernd vollständig gefüllt ist. Das in dem weiteren Schneckenmischer 173 aufbereitete Mischgut besteht vorzugsweise aus den gleichen Grundbestandteilen wie das Mischgut, welches in dem Schneckenmischer 172 aufbereitet wird, also insbesondere aus Polyethylen und zerkleinertem Altgummimaterial in dem oben bezeichneten Mischungsverhältnis und mit der oben bezeichneten Teilchengröße des Altgummimaterials. Dem Schneckenmischer 173 wird aber nunmehr neben dem gehäkselten Polyethylen und dem Altgummimaterial Hartstoffmaterial zugeführt, das wiederum mit einer Haftvermittlerschicht vorher versehen worden sein kann. Ein Zulauf 173a dient der Zuführung von Polyethylen-Gehäksel, der Zulauf 173b dient der Zuführung des Altgummimaterials und der Zulauf 173c dient der Zuführung der Hartstoffpartikel. In dem Schneckenmischer 173 werden diese drei Komponenten zu einer Mischung verarbeitet, welche dann in die Unterform 182a gegeben wird. Beim Zusammentreffen des bereits in der Unterform enthaltenen Mischguts mit dem zusätzlichen aus dem Schneckenmischer 173 zulaufenden Mischguts sind beide Chargen noch in einem Zustand, daß sie sich bei nachfolgender Verpressung innig miteinander verbinden.

Die Form 182a besitzt beim Einfüllen des Mischguts eine Temperatur, die knapp unterhalb des Erweichungspunkts des thermoplastischen Folienmaterials liegt. In der Form wird durch das Verpressen des zunächst noch über den thermoplastischen Erweichungspunkt erhitzten Mischguts eine Matrix von thermoplastischem Material gebildet, in welcher die Teilchen des vulkanisierten Altgummimaterials einzeln oder gruppenweise eingeschlossen sind. Die Temperatur der Form 182a, 182b knapp unterhalb des Erweichungspunkts verhindert eine Schockabkühlung. In der Form 182a, 182b tritt sodann eine langsame Abkühlung ein. Sobald die Abkühlung des Mischguts soweit fortgeschritten ist, daß ein stabiler Formkörper entstanden ist, wird dieser aus der Form entnommen und weiter abgekühlt. Der abgekühlte Formkörper ist zum Einsatz in einer Gleisübergangseinrichtung fertig.

Das Verfahren gemäß Fig. 12 ist insbesondere zur Herstellung der Mittel- und Außenplatten 122 und 128 der Figur 8 geeignet.

Grundsätzlich ist es aber auch möglich, nach dem Verfahren gemäß Fig. 12 die Mittelplatten 22 und die Außenplatten 28 gemäß Fig. 1 herzustellen; die Mittelplatten 22 und die Außenplatten 28 gemäß Fig. 1 werden bevorzugt nach dem Verfahren gemäß Fig. 10 und 11 hergestellt. Umgekehrt ist es aber auch möglich, die Mittelplatten 22 und die Außenplatten 28 gemäß Fig. 1 nach dem Verfahren gemäß Fig. 12 herzustellen.

Zur Herstellung der Schienenformstücke 18 gemäß Fig. 1 kann man das Verfahren gemäß Fig. 12 ebenfalls anwenden, wobei in diesem Fall die Zumischung der Hartstoffpartikel 127 entfallen kann. In diesem Fall kann auch die zweistufige Beschickung der Unterform 182a durch eine einstufige Beschickung ersetzt werden.

Bei dem nach Figur 12 hergestellten Formkörper ist das Hartstoffmaterial 127 in die obere Schicht L eingebettet, die Schicht ist in ihrer Schichtstärke so bemessen, daß im Laufe der Betriebsbenutzung solange Hartstoffmaterial im Bereich der jeweils verkehrsbelasteten Fläche vorliegt, als der Formkörper überhaupt brauchbar ist. Bei dieser Ausführungsform ist aufgrund des Herstellungsverfahrens die Einbindung des Hartstoffmaterials besonders innig. Trotzdem kann auch hier ein Haftvermittler verwendet werden, der einerseits gute Haftung an dem jeweiligen Hartstoffmaterial und andererseits gute Haftung an dem thermoplastischen Bindemittel besitzt.

Das Hartstoffmaterial kann in beiden Ausführungsformen beispielsweise von Korundpartikeln und/oder Metallkarbidpartikeln und/oder Metallnitridpartikeln und/oder Metalloxydpartikeln gebildet sein.

Ein bevorzugtes Hartstoffmaterial ist Korund.

Soweit man sich eines Haftvermittlers bedient, hängt dieser einerseits von der stofflichen Beschaffenheit der Hartstoffpartikel und andererseits von der stofflichen Beschaffenheit des Bindemittels ab. Übliche Lösungsmittelkleber sind vielfach geeignet; im Falle einer Kombination von Korund-Hartstoffpartikeln und vulkanisiertem Rohgummi verwendet man als Haftvermittler bevorzugt einen Haftprimer entsprechend dem Produkt Chemosil 211 der Fa. Henkel KG a.A. gemäß Druckschrift der Fa. Henkel KG a.A. KHM 6/87. Weiter geeignet ist auch ein Bindemittel nach Art des Produkts Chemosil 220 ebenfalls von der Fa. Henkel KG a.A. und beschrieben in deren Druckschrift KHM 6/87.

In jedem Fall ist auf solche Konsistenz des Haftvermittlers zu achten, daß dieser ausreichend rasch soweit aushärtet, um eine Verklebung der Aufbringungs- und Fördereinrichtungen zu verhindern, andererseits aber bei der endültigen Ausformung der verkehrsbelasteten Fläche noch hinreichend Adhäsion zu dem jeweiligen Bindemittel besitzt.

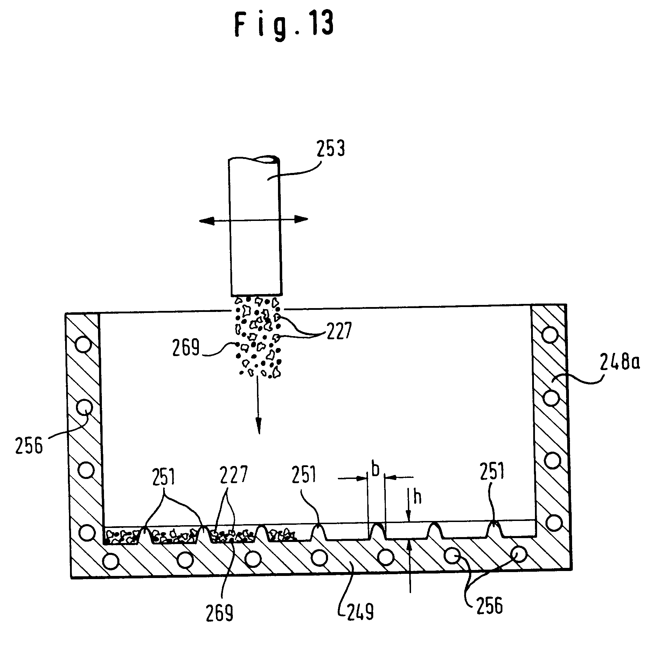

In den Figuren 13 und folgenden sind ähnliche Teile mit den gleichen Bezugszeichen versehen, wie in Fig. 10 und 11, jeweils vermehrt um 200. Man erkennt in Fig. 13 eine Unterform 248a, die ähnlich aufgebaut ist wie die Unterform 48a in Fig. 10 und ebenso wie diese mit einer Wärmeaustauschvorrichtung 256 versehen sein kann. Diese Unterform 248a ist an ihrer Bodenfläche 248 mit erhabenen Rippen 251 versehen. Die Rippen kreuzen sich, so daß sie ein Rautenmuster bilden. Dieses Rautenmuster ist annähernd komplementär zu dem in Fig. 9 bei 132 dargestellten Rautenmuster an der Fahrfläche des dort dargestellten Formkörpers.

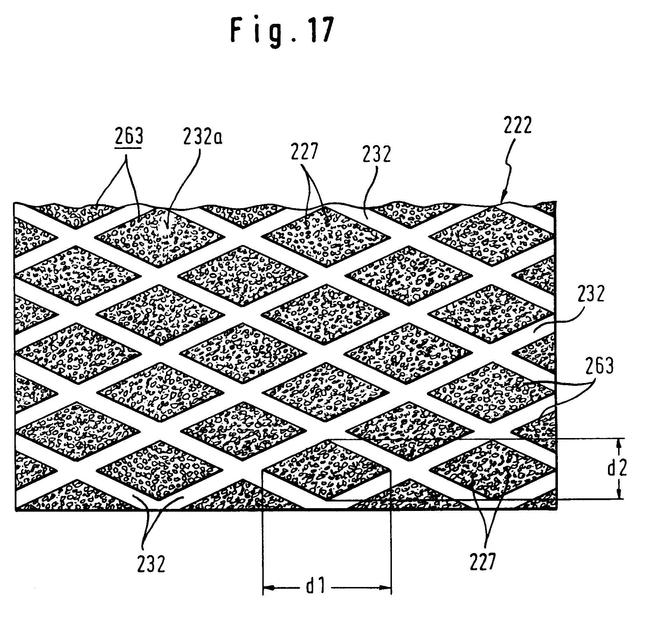

In einem Querschnitt, orthogonal zum Längsverlauf der Rippen betrachtet, haben diese Rippen beispielsweise eine Breite b von 6 mm und eine Höhe h ebenfalls von 6 mm. Wie aus Fig. 17 ersichtlich, haben die großen Diagonalen d1 eine Länge von ca. 30 mm bis ca. 50 mm, vorzugsweise ca. 45 mm und die kurzen Diagonalen d2 eine Länge von ca. 15 mm bis ca. 25 mm, vorzugsweise ca. 20 mm. Diese Größenangaben dienen nur dazu, eine Größenvorstellung zu vermitteln und können in weiten Grenzen variiert werden.

Der Herstellungsvorgang ist wie folgt: In die bezeizte Unterform 248a werden durch ein Beschickungsgerät 253 Hartstoffpartikel 227 eingestreut, die auf ihrer Oberfläche mit einem Haftvermittler beschichtet sein können, etwa mit den oben erwähnten Lösungsmittelklebern der Fa. Henkel.

Der Haftvermittler ist dabei teilweise ausgehärtet. Die so beschichteten Hartstoffpartikel 227 werden durch eine Bewegung des Beschickungsgeräts 253 gleichmäßig über die Bodenfläche 249 verteilt. Dabei gelangen die Hartstoffpartikel 227 aufgrund der Rippenform bevorzugt in die Flächenbereiche zwischen den Rippen 251. Man beachte, daß gemäß Fig. 13 die Rippen 251 in ihrem Querschnitt nach oben konvex gerundet sind. Dadurch wird die Konzentration der Hartstoffpartikel auf die durch die Rippen 251 begrenzten rautenförmigen Bereiche der Bodenfläche 249 begünstigt. Die Konzentration auf die rautenförmigen Bodenbereiche zwischen den Rippen kann noch durch Rüttelbewegung der Unterform 248a begünstigt werden. Die Korngröße der Hartstoffpartikel, gemessen nach Aufbringung der Haftvermittlerschicht, liegt zwischen ca. 1 mm und ca. 3 mm, wobei jeweils die größte lineare Längenausdehnung gemessen ist. Die Hartstoffpartikel 227 werden in solcher Menge auf den Boden 249 aufgestreut, daß die Schichtobergrenze unterhalb der Scheitelpunkte der Rippen 251 liegt.

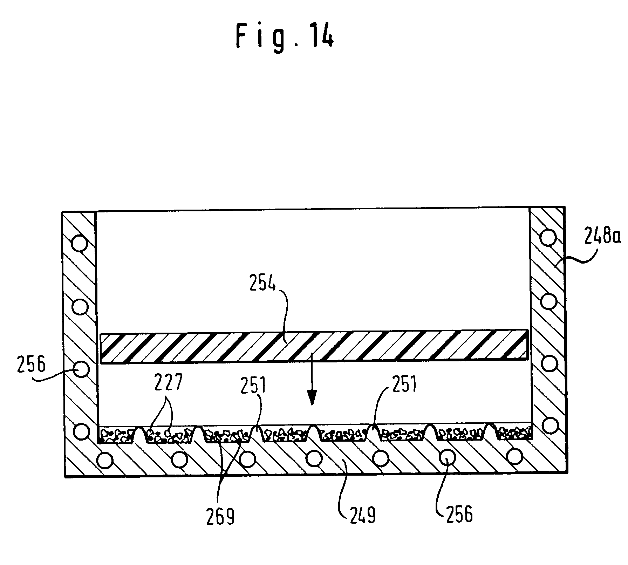

Gemäß Fig. 14 wird nun auf den Boden 249 über die Rippen 251 und über die Hartstoffpartikeln eine vulkanisierbare vorgeformte Rohgummideckschicht 254 aufgelegt.

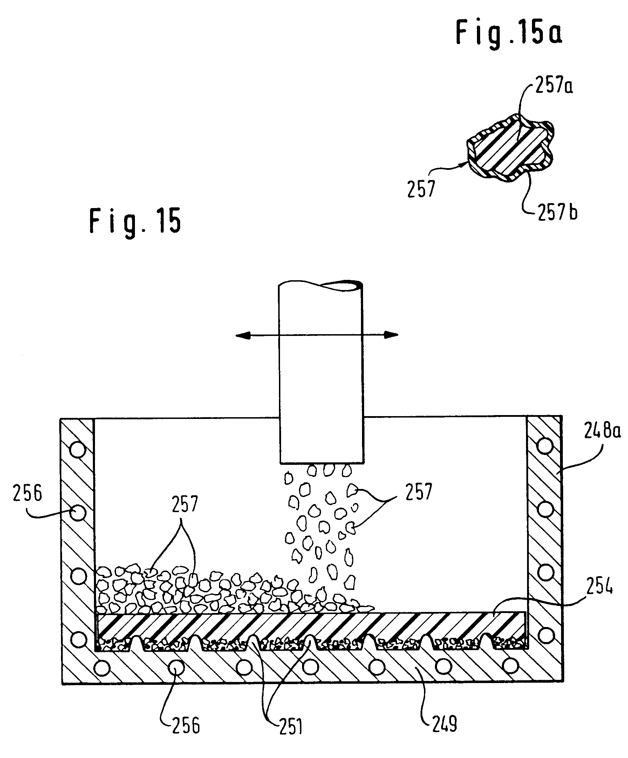

Gemäß Fig. 15 wird auf diese Rohgummideckschicht 254 ein Mischgut bestehend aus Altgummiteilchen und vulkanisierbarem Rohgummimaterial aufgebracht. Dieses Mischgut ist mit 257 bezeichnet. Das Mischgut kommt aus einem Mischer, wie er bei 38 in Fig. 10 dargestellt ist. Dabei sind die Altgummiteilchen 257a, wie in Fig. 15a als Folge des Mischvorgangs in dem Mischer dargestellt, bereits teilweise von dem vulkanisierbarem Rohgummi 257b umschlossen. Die Altgummiteilchen haben eine größte lineare Ausdehnung von ca. 7 mm. Die Altgummiteilchen werden wieder bevorzugt durch Zerkleinerung von Autoreifendeckenmaterial gewonnen. Die Temperatur des Mischguts 257 bei der Einführung in die Unterform 248a ist bevorzugt so eingestellt, daß sie ausreicht, um bei nachfolgender Druckeinwirkung eine Vulkanisation des Rohgummianteils 257b zu bewirken. Die stoffliche Zusammensetzung und der Vernetzungsgrad des Rohgummianteils 257b in dem Mischgut 257 entsprechen vorzugsweise der stofflichen Zusammensetzung und dem Vernetzungsgrad der vulkanisierbaren Rohgummideckschicht 254.

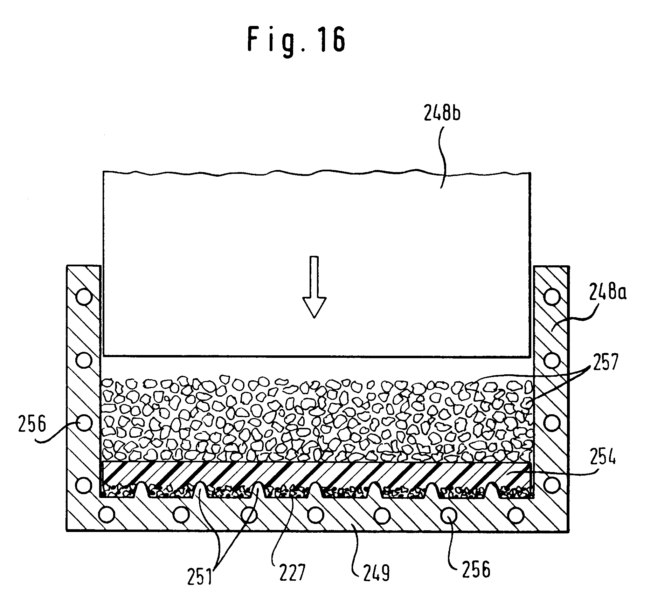

Nachdem die Unterform 248a bis zu einer gewünschten Höhe entsprechend der jeweils gewünschten Plattendicke mit Mischgut gefüllt worden ist, wird gemäß Fig. 16 eine Oberform 248b in die Unterform 248a eingesenkt und gegen die Aufschüttung des Mischguts 257 gepreßt. Durch Beheizung der Unterform 248a und/oder der Oberform 248b kann die zum Vulkanisieren notwendige Temperatur korrigiert werden. Während die Vulkanisation des Rohgummianteils 257b des Mischguts 257 im wesentlichen durch die im Mischer bei der Vermischung von Altgummiteilchen und Rohgummi zugeführte Wärme erfolgt, wird die zur Vulkanisation der Rohgummideckschicht 254 benötigte Wärmemenge insbesondere durch die Oberform 248b zugeführt. Dabei tritt eine Vulkanisation des Rohgummianteils 257b des Mischguts 257 und eine Vulkanisation der Rohgummideckschicht 254 ein. Der Rohgummianteil 257b des Mischguts bildet zusammen mit den Altgummiteilchen eine Matrix, welche die Altgummiteilchen 257a einschließt und mit der Rohgummideckschicht 254 zusammenwächst, so daß eine mit der Matrix verbundene vulkaniserte Deckschicht entsteht. Durch die Druckausübung mittels der Oberform 248b wird in der Unterseite der Rohgummideckschicht zu Beginn des Vulkansiationsvorgangs das Rautenmuster eingeprägt, welches in Fig. 17 dargestellt ist, gleichzeitig werden die Hartstoffpartikel in die Rohgummideckschicht eingedruckt und dann einvulkanisiert.

In Fig. 17 erkennt man einen Formkörper 222, der beispielsweise einer Mittelplatte 22 gemäß Fig. 1 entspricht. In Fig. 17 entspricht die als befahrene Fläche dienende Obeseite 232a der in Fig. 13 auf der Bodenfläche 249 aufliegenden Fläche der Rohgummideckschicht 254. In dieser Oberseite erkennt man die sich kreuzenden Nuten 232, welche durch Einprägung der Rippen 251 in die Rohgummideckschicht 254 entstanden sind.

Man kann aus Fig. 17 ersehen, daß die Hartstoffpartikel 227 im wesentlichen auf die rautenförmige Bereiche 263 beschränkt sind, während die Begrenzungsflächen der Nuten 232 von Hartstoffpartikeln im wesentlichen frei sind, entsprechend der früher beschriebenen Freihaltung der Rippen 251 von Hartstoffpartikeln 227. Dies ist erwünscht: Dadurch, daß die Nuten 232 von Hartstoffpartikeln 227 freigehalten werden, vergrößert sich die Flächendichte der Hartstoffpartikel 227 in den rautenformigen Bereichen 263 bei einer gegebenen Gesamtmenge an aufgestreuten Hartstoffpartikel 227. Man erhält also mit einem relativ geringem Verbrauch an Hartstoffpartikeln 227 eine große Konzentration an Hartstoffpartikeln dort, wo diese zur Erzielung hoher Rutschfestigkeit auf der Oberfläche 232a benötigt werden, nämlich in den rautenförmigen Bereichen 263. Ein weiterer Vorteil der Freihaltung der Nuten 232 von Hartstoffpartikeln 227 liegt darin, daß das Wasserfließvermögen in den Nuten 232 verbessert wird, so daß mit einem beschleunigten Wasserabfluß gerechnet werden kann.

Bei der Herstellung der Mittelplatten 222 nach dem soweit beschriebenen Verfahren dringen die Hartstoffpartikel 227 teilweise in die der Vulkanisierung unterworfene Rohgummideckschicht 254 ein und werden von vulkanisiertem Rohgummi teilweise umschlossen. Die Hartstoffpartikel liegen deshalb nur teilweise mit ihren Spitzen in oder über der verkehrsbelasteten Oberseite 232a. Dies bedeutet, daß zu Beginn der Benutzung einer Mittelplatte 222 die Reibung eines über die Mittelplatte sich bewegenden Rads noch nicht optimal ist. Nach einer gewissen Benutzungszeit nutzt sich die Gummischicht an der verkehrsbelasteten Oberseite 232a der Mittelplatte ab und zwar stärker als die Hartstoffpartikel 227. Als Folge hiervon werden die Spitzen von weiteren Hartstoffpartikeln 227 freigelegt, so daß optimale Reibeigenschaften an der Oberseite der Mittelplatten 222 entstehen. Man kan sich mit diesem Verhalten abfinden, d.h. in Kauf nehmen, daß die Oberflächenrauhigkeit der verkehrsbelasteten Oberseite 232a zu Beginn der Benutzung noch nicht optimal ist.

Dies ist insbesondere dann möglich, wenn man bei den gegebenen klimatischen Verhältnissen mit einem Einbau in trockener Jahreszeit rechnen kann und erwarten kann, daß bis zum Einsetzen einer feuchten Witterungsperiode bereits eine ausreichende Abnutzung des Gummis an der Oberseite 232a eingetreten ist, um eine hinreichende Menge von Hartstoffpartikeln 227 an ihren, der verkehrsbelasteten Oberseite 232a zugekehrten Spitzen und Kanten freizulegen.

Es ist aber auch möglich, dafür zu sorgen, daß bereits vom Zeitpunkt des Einbaus der Formkörper bzw. Mittelplatten an eine ausreichende Rauhigkeit der verkehrsbelasteten Oberseite 232a existiert. So ist es möglich, die Oberseite 232a nach dem Vulkansisationsvorgang, möglicherweise auch erst nach einer gewissen Standzeit oder Nachhärtungszeit einer Aufrauhbehandlung zu unterwerfen.

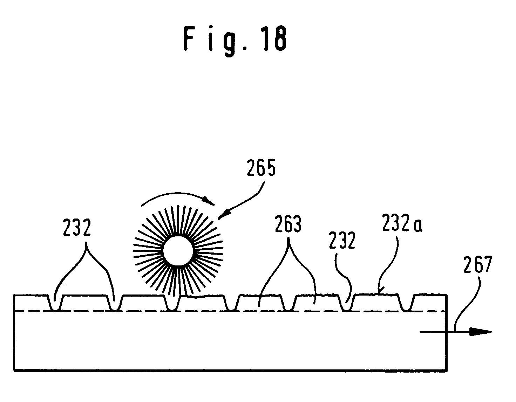

Eine bevorzugte Möglichkeit zur Durchführung dieser Aufrauhbehandlung ist in Fig. 18 dargestellt. Man erkennt dort, wie eine Mittelplatte unter einer rotierenden Stahldrahtbürstenwalze 265 in Pfeilrichtung 267 hindurchgeführt wird. Durch die Einwirkung der Stahldrahtspitzen der Stahldrahtbürstenwalze 265 wird die Oberseite 232a aufgerauht, wobei verstärkt die Gummianteile in den Rautenbereichen 263 abgetragen werden, so daß zunehmend Hartstoffpartikel 227 in ihren Spitzenbereichen freigelegt werden, ohne die Haftung in der vulkanisierten Deckschicht zu verlieren. Dafür, daß die Haftung zwischen den Hartstoffpartikeln 227 und der vulkanisierten Deckschicht 254 erhalten bleibt, sorgt insbesondere der weiter oben erwähnte Haftvermittler.

Um die Aufrauhung der verkehrsbelasteten Oberseite durch die Strahldrahtbürstenwalze 265 bei minimalen Verlust von Hartstoffpartikeln aus der verkehrsbelasteten Oberseite zu begünstigen, kann man auch noch folgende Maßnahmen anwenden: Gemäß Fig. 13 werden zusammen mit den vorteilhafterweise aber nicht notwendigerweise mit Haftvermittler beschichteten Hartstoffpartikeln 227 Aufrauhhilfsmittel 269 eingestreut. Diese Aufrauhhilfsmittel können mineralischer Natur sein, sollten aber weicher und deshalb durch die Strahldrahtbürstenwalze leichter abtragbar sein als die Hartstoffpartikel 227 und auch leichter abtragbar sein als das vulkaniserte Gummimaterial der vulkanisierten Gummideckschicht 254. Man sollte dabei insbesondere auch darauf achten, daß das Aufrauhhilfsmittel zu dem Haftvermittler der Hartstoffpartikel 227 und zu dem vulkaniserten Gummimaterial der Gummideckschicht 254 ein geringeres Haftvermögen besitzt, als die Hartstoffpartikel 227 zu dem Gummimaterial. Das Aufrauhhilfsmittel kann beispielsweise aus bestimmten Polymeren bestehen, welche zu der Haftvermittlerbeschichtung der Hartstoffpartikel und zu dem Gummimaterial der Gummideckschicht 254 ein verhältnismäßig geringes Haftvermögen besitzen. Dann wird bei der Aufrauhbehandlung gemäß Fig. 18 das Aufrauhhilfsmittel durch die Stahldrahtbürstenwalze 265 in verstärktem Maße abgetragen, ohne daß die Haftung der haftvermittlerbeschichteten Hartstoffpartikel in der vulkanisierten Gummideckschicht 254 beeinträchtigt wird, und ohne daß Hartstoffpartikel durch Abtragen des Gummimaterials vollständig freigelegt werden. Man kann sich diesen Vorgang so vorstellen, daß zwischen den mit haftvermittlerbeschichteten Hartstoffpartikeln und der Hauptmasse des Gummimaterials der Deckschicht 254 Gummibrücken bestehen bleiben, daß aber dennoch durch den Abtrag des Aufrauhhilfsmittels der verkehrsbelasteten Seite 232 zugekehrte Spitzen und Kanten der Hartstoffpartikel 227 durch Heraus lösen einzelner Elemente des Aufrauhhilfsmittels rauhigkeitserhöhend freigelegt werden.

Es hat sich gezeigt, daß bei Einsatz von Aufrauhhilfsmitteln der Verlust an Hartstoffpartikeln 227 bei der Aufrauhbehandlung gemäß Fig. 18 geringer ist, als bei Aufrauhbehandlung ohne den Einsatz der Aufrauhhilfsmittel, daß die Gleichmäßigkeit der Spitzenfreilegung durch die Aufrauhbehandlung verbessert wird und daß der Energie- und Bürstenverbrauch durch den Einsatz der Aufrauhhilfsmittel bei der Aufrauhbehandlung gemäß Fig. 18 reduziert wird.

Wenn in der vorstehenden Beschreibung der Begriff "aushärtbare Formmasse" verwendet wird, so soll dies grundsätzlich nur besagen, daß die Formmasse zur Ausformung in einen flüssigen oder zähplastischen Zustand eingestellt werden kann und nach Ausformung gehärtet werden kann. Aushärtbare Formmassen sind also neben Formmassen, die durch chemische Reaktion aushärten, insbesondere auch thermoplastische Formmassen, die durch Erwärmung ausformbar gemacht werden können und durch anschließende Abkühlung gehärtet werden können. Ferner werden als aushärtbare Formmassen auch vulkaniserbare Formmassen auf Gummibasis in Betracht gezogen. Bezüglich der hier angesprochenen Bindemittel gilt das gleiche wie für die Formmassen.

## Patentansprüche

1. Verfahren zur Herstellung eines teilchenförmiges Altgummimaterial enthaltenden Formkörpers für die Bildung einer Verkehrsfläche, insbesondere einer Gleisübergangseinrichtung, bei dem durch Aushärten einer aushärtbaren Formmasse eine der verkehrsbelasteten Formkörperfläche nahe Schicht (22y) gebildet und in diese Schicht Hartstoffpartikel (27) zur Erhöhung der Verkehrsflächenrauheit eingebracht werden,
wobei zwischen einer ersten, sich über die verkehrsbelastete Formkörperfläche erstreckenden Formgebungsfläche (48b) und einer zweiten, die jeweilige verkehrsferne Formkörperfläche erzeugenden Formgebungsfläche (48a) die Formmasse unter Druck gesetzt und ausgehärtet wird,
dadurch gekennzeichnet,
daß man in die noch aushärtbare Formmasse die Hartstoffpartikel (27) dadurch einbringt, daß man zwischen der ersten Formgebungsfläche (48b) und der zweiten Formgebungsfläche (48a) eine der ersten Formgebungsfläche (48b) anliegende, unregelmäßig gestaltete und angeordnete Hartstoffpartikel (27) enthaltende Streuschichtung (27d) und eine der Streuschichtung (27d) anliegende Formmasse (50,52,54) unter Druck setzt und daß man die so in die Formmasse (50,52,54) eingebrachten Hartstoffpartikel (27) in der aus der Formmasse entstehenden, der verkehrsbelasteten Formkörperfläche nahen Schicht (22y) durch deren Aushärtung einbindet.

2. Verfahren nach Anspruch 1,
dadurch gekennzeichnet,
daß man als Bindemittel der Formmasse vulkanisierbaren Rohgummi verwendet.

3. Verfahren nach Anspruch 1,
dadurch gekennzeichnet,
daß man als Bindemittel der Formmasse ein thermoplastisches Bindemittel, insbesondere auf Polyolefinbasis, verwendet.

4. Verfahren nach einem der Ansprüche 1 - 3,
dadurch gekennzeichnet,
daß man Hartstoffpartikel (27) verwendet, die mit einer Haftvermittlerschicht (27a), insbesondere mit einer organischen Haftvermittlerschicht (27a), zum Beispiel einer Kunstharzkleberschicht (27a), beschichtet sind.

5. Verfahren nach einem der Ansprüche 1 - 4,
dadurch gekennzeichnet,
daß man als Hartstoffpartikel (27) Korundpartikel und/oder Metallkarbidpartikel und/oder Metallnitridpartikel und/oder Metalloxidpartikel verwendet.

6. Verfahren nach einem der Ansprüche 1 - 5,
dadurch gekennzeichnet,
daß man Hartstoffpartikel (27) mit einer durchschnittlichen Größe von ca. 0,5 mm bis ca. 4 mm verwendet.

7. Verfahren nach einem der Ansprüche 1 - 6,
dadurch gekennzeichnet,
daß die Hartstoffpartikel (27) derart eingebunden werden, daß sie im Neuzustand, jedenfalls aber nach kurzem Gebrauch, an der verkehrsbelasteten Fläche freiliegen und/oder aus dieser herausragen.

8. Verfahren nach einem der Ansprüche 1 - 7,
dadurch gekennzeichnet,
daß man die Hartstoffpartikel (27) mit einem organischen, aushärtbaren Haftvermittler versieht und die Hartstoffpartikel (27) in die Formmasse in einem Zustand einbringt, in dem der Haftvermittler noch zur Einbindung in die Formmasse geeignet ist.

9. Verfahren nach einem der Ansprüche 1 - 8,
dadurch gekennzeichnet,
daß man die Hartstoffpartikel (127) einem teilchenförmigen Altgummimaterial zusetzt, dieses sodann mit einem erhärtbaren Bindemittel mischt, das so erhaltene Gemisch zu dem Formkörper oder zumindest zu der der verkehrsbelasteten Fläche nahen Schicht (L) ausformt und das Bindemittel aushärten läßt.

10. Verfahren nach einem der Ansprüche 1 - 8,
dadurch gekennzeichnet,
daß man die Hartstoffpartikel (127) einem Bindemittel beimischt, dieses sodann mit einem teilchenförmigen Altgummimaterial mischt, das so erhaltene Gemisch ausformt und das Bindemittel sodann aushärten läßt.

11. Verfahren nach einem der Ansprüche 1 - 8,
dadurch gekennzeichnet,
daß man eine Formmasse zu dem Formkörper oder einer der verkehrsbelasteten Fläche des Formkörpers nahen Schicht (54) ausformt, die verkehrsbelastete Fläche sodann mit den Hartstoffpartikeln (27) bestreut und den Formkörper bzw. die Schicht sodann aushärten läßt.

12. Verfahren nach Anspruch 11,
dadurch gekennzeichnet,
daß man die Hartstoffpartikel (27) nach dem Aufstreuen in eine der verkehrsbelasteten Fläche nahe Schicht (54) eindrückt und diese Schicht sodann aushärten läßt.

13. Verfahren nach Anspruch 11 oder 12,
dadurch gekennzeichnet,
daß man nach dem Aufstreuen der Hartstoffpartikel (27) und insbesondere nach dem Eindrücken der Hartstoffpartikel in die der verkehrsbelasteten Fläche nahe Schicht einen Teil der aufgestreuten Hartstoffpartikel abkehrt.

14. Verfahren nach einem der Ansprüche 11 - 13,
dadurch gekennzeichnet,
daß man einen aus teilchenförmigem Altgummimaterial und vulkanisierbarer Rohgummimischung bestehenden Kernbereich eines Formkörpers mit einer Schicht aus vulkanisierbarem Rohgummi beschichtet, so daß die Schicht aus vulkanisierbarem Rohgummi die verkehrsbelastete Fläche bildet, daß man sodann auf die verkehrsbelastete Fläche die Hartstoffpartikel aufstreut und diese gewünschtenfalls in die verkehrsbelastete Fläche eindrückt und daß man sodann die vulkanisierte Rohgummimischung in dem Kernbereich und in der der verkehrsbelasteten Fläche nahen Schicht gemeinsam vulkanisiert.

15. Verfahren nach einem der Ansprüche 1 - 8,
dadurch gekennzeichnet,
daß man eine Unterform (248a) verwendet, welche eine vertikal nach oben gerichtete Bodenfläche (249) und auf dieser Bodenfläche nach oben gerichtete Vorsprünge (251) besitzt, daß man auf diese Bodenfläche (249) sodann Hartstoffpartikel (227) aufstreut derart, daß sich diese Hartstoffpartikel (227) im wesentlichen zwischen den Vorsprüngen (251) auf der Bodenfläche ansammeln und daß man in die Unterform (248a) sodann eine aushärtbare Formmasse einbringt und diese aushärtet.

16. Verfahren nach Anspruch 15,
dadurch gekennzeichnet,
daß man die Unterform (248a) einer Rüttelbewegung unterwirft, so daß sich die Hartstoffpartikel (227) bevorzugt in den Bereichen außerhalb der Vorsprünge (251) ansammeln.

17. Verfahren nach einem der Ansprüche 15 und 16,
dadurch gekennzeichnet,
daß man auf den Boden (249) der Unterform (248a) über den eingestreuten Hartstoffpartikeln (227) zunächst eine Bindemittelschicht (254) aufträgt und über dieser Bindemittelschicht eine Mischung (257) von Bindemitteln (257b) und teilchenförmigem Altgummimaterial (257a) aufträgt und dieses Bindemittel (257b) gleichzeitig mit dem Bindemittel der Bindemittelschicht (254) zur Erhärtung bringt.

18. Verfahren nach einem der Ansprüche 15-17,
dadurch gekennzeichnet,
daß man die Formmasse (254,257b) innerhalb der Unterform (248a) durch Einführen einer Oberform (248b) in die Unterform (248a) unter Druck setzt.

19. Verfahren nach einem der Ansprüche 15 - 18,
gekennzeichnet durch die Verwendung einer Unterform (248a) dergestalt, daß der Formkörper in seiner verkehrsbelasteten Fläche Einsenkungen (232) erhält und daß die Konzentration der Hartstoffpartikel (227) im Bereich dieser Einsenkungen (232) geringer ist als in Oberflächenbereichen (263) der verkehrsbelasteten Fläche (232a) außerhalb dieser Einsenkungen (232).

20. Verfahren nach Anspruch 19,
gekennzeichnet durch die Verwendung einer Unterform (248a) dergestalt, daß die verkehrsbelastete Fläche (232a) im Bereich der Einsenkungen (232) von Hartstoffpartikeln (227) im wesentlichen frei ist.

21. Verfahren nach Anspruch 19 oder 20,
gekennzeichnet durch die Verwendung einer Unterform (248a) dergestalt, daß die Einsenkungen (232) als Rinnen ausgebildet werden.

22. Verfahren nach Anspruch 21,
gekennzeichnet durch die Verwendung einer Unterform (248a) dergestalt, daß die Rinnen (232) in Umrandungsflächen des Formkörpers (222) ausmünden.

23. Verfahren nach Anspruch 21 oder 22,
gekennzeichnet durch die Verwendung einer Unterform (248a) dergestalt, daß die Rinnen (232) im wesentlichen geradlinig über die verkehrsbelastete Fläche (232a) verlaufen.

24. Verfahren nach einem der Ansprüche 21 - 23,
gekennzeichnet durch die Verwendung einer Unterform (248a) dergestalt, daß mehrere, vorzugsweise zwei Scharen von in der jeweiligen Schar zueinander parallelen Rinnen (232) vorgesehen werden, wobei sich die Rinnen (222) der einzelnen Scharen kreuzen.

25. Verfahren nach einem der Ansprüche 1 - 24,
dadurch gekennzeichnet,
daß man die verkehrsbelastete Fläche (232a) des Formkörpers (222) nach dem Aushärten der aushärtbaren Formmasse einer Aufrauhbehandlung unterwirft.

26. Verfahren nach Anspruch 25,
dadurch gekennzeichnet,
daß die Aufrauhbehandlung mittels mindestens einer Metalldrahtbürste (265), insbesondere mittels einer rotierenden Metalldrahtbürste (265), durchgeführt wird.

27. Verfahren nach einem der Ansprüche 1 - 26,
dadurch gekennzeichnet,
daß man vor der Aushärtung der verkehrsbelasteten Fläche des Formkörpers (222) in diese ein Aufrauhhilfsmittel (269) einbringt, welches zu den Hartstoffpartikeln (227) und zu der ausgehärteten Formmasse (254) ein geringeres Haftvermögen besitzt als die Hartstoffpartikel (227) zu der ausgehärteten Formmasse (254), wobei man diese Aufrauhhilfsmittel (269) nach dem Aushärten der Formmasse (254) gewünschtenfalls wenigstens teilweise entfernt.

28. Verfahren nach Anspruch 27,
dadurch gekennzeichnet,
daß man das Aufrauhhilfsmittel (269) auf den Boden (249) einer Unterform (248a) aufstreut, auf den auch die Hartstoffpartikel (227) gleichzeitig oder nach dem Aufrauhhilfsmittel (269) und vor dem Einbringen der aushärtbaren Formmasse (254) aufgestreut werden.

## Claims

1. Process for manufacturing a moulded body containing particulate waste rubber material for forming a traffic surface, in particular a track crossing device, in which a layer (22y), which is near the traffic-carrying moulded body surface, is formed by curing a curable moulding compound, and hard material particles (27) are introduced into this layer to increase the traffic surface roughness,
wherein the moulding compound is pressurised between a first shaping surface (48b), which extends over the traffic-carrying moulded body surface, and a second shaping surface (48a), which produces the respective moulded body surface which is remote from the traffic, and cured,
characterised in that the hard material particles (27) are introduced into the still curable moulding compound by pressurising a scattering lamination (27d), which adjoins the first shaping surface (48b) and contains irregularly formed and disposed hard material particles (27), and a moulding compound (50, 52, 54), which adjoins the scattering lamination (27d), between the first shaping surface (48b) and the second shaping surface (48a), and that the hard material particles (27) thus introduced into the moulding compound (50, 52, 54) are bonded in the layer (22y) resulting from the moulding compound and near the traffic-carrying moulded body surface through curing this layer.

2. Process according to Claim 1,
characterised in that vulcanizable raw rubber is used as the binding agent for the moulding compound.

3. Process according to Claim 1,
characterised in that a thermoplastic binding agent, in particular one which is polyolefin-based, is used as the binding agent for the moulding compound.

4. Process according to any one of Claims 1 - 3,
characterised in that hard material particles (27) are used which are coated with a bonding agent layer (27a), in particular with an organic bonding agent layer (27a), for example a synthetic resin adhesive layer (27a).

5. Process according to any one of Claims 1 - 4,
characterised in that corundum particles and/or metal carbide particles and/or metal nitride particles and/or metal oxide particles are used as the hard material particles (27).

6. Process according to any one of Claims 1 - 5,
characterised in that hard material particles (27) of an average size of approximately 0.5 mm to approximately 4 mm are used.

7. Process according to any one of Claims 1 - 6,
characterised in that the hard material particles (27) are bonded such that they are exposed at the traffic-carrying surface and/or protrude out of this in the new state, or at least after a short period of use.

8. Process according to any one of Claims 1 - 7,
characterised in that the hard material particles (27) are provided with an organic, curable bonding agent, and the hard material particles (27) are introduced into the moulding compound in a state in which the bonding agent is still suitable for bonding into the moulding compound.

9. Process according to any one of Claims 1 - 8,
characterised in that the hard material particles (127) are added to a particulate waste rubber material, this material is then mixed with a hardenable binding agent, the mixture thus obtained is moulded into the moulded body or at least into the layer (L) near the traffic-carrying surface, and the binding agent is cured.

10. Process according to any one of Claims 1 - 8,
characterised in that the hard material particles (127) are admixed to a binding agent, this agent is then mixed with a particulate waste rubber material, the mixture thus obtained is moulded and the binding agent is then cured.

11. Process according to any one of Claims 1 - 8,
characterised in that a moulding compound is moulded into the moulded body or a layer (54) near the traffic-carrying surface of the moulded body, the traffic-carrying surface is then strewn with the hard material particles and the moulded body or the layer is then cured.

12. Process according to Claim 11,
characterised in that the hard material particles (27) are pressed into a layer (54) near the traffic-carrying surface after being strewn and this layer is then cured.

13. Process according to Claim 11 or 12,
characterised in that, after the hard material particles (27) have been strewn and, in particular, after the hard material particles have been pressed into the layer near the traffic-carrying surface, some of the strewn hard material particles are swept off.

14. Process according to any one of Claims 11 - 13,
characterised in that a core region, consisting of particulate waste rubber material and vulcanizable raw rubber mixture, of a moulded body is coated with a layer of vulcanizable raw rubber, so that the layer of vulcanizable raw rubber forms the traffic-carrying surface, that the hard material particles are then strewn onto the traffic-carrying surface and, if desired, pressed into the traffic-carrying surface, and that the vulcanized raw rubber mixture in the core region and in the layer near the traffic-carrying surface are then vulcanized together.

15. Process according to any one of Claims 1 - 8,
characterised in that a lower mould (248a) is used which has a bottom surface (249) directed vertically upwards and upward directed projections (251) on this bottom surface, that hard material particles (227) are then strewn onto this bottom surface (249) such that these hard material particles (227) accumulate substantially between the projections (251) on the bottom surface, and that a curable moulding compound is then introduced into the lower mould (248a) and cured.

16. Process according to Claim 15,
characterised in that the lower mould (248a) is subjected to a shaking movement, so that the hard material particles (227) preferably accumulate in the regions outside of the projections (251).

17. Process according to either of Claims 15 and 16,
characterised in that a binding agent layer (254) is firstly applied to the bottom (249) of the lower mould (248a) over the strewn hard material particles (227), and a mixture (257) of binding agents (257b) and particulate waste rubber material (257a) is applied over this binding agent layer, and this binding agent (257b) is hardened at the same time as the binding agent of the binding agent layer (254).

18. Process according to any one of Claims 15 - 17,
characterised in that the moulding compound (254, 257b) is pressurised inside the lower mould (248a) by introducing an upper mould (248b) into the lower mould (248a).

19. Process according to any one of Claims 15 - 18,
characterised by the use of a lower mould (248a) such that the moulded body is given depressions (232) in its traffic-carrying surface, and that the concentration of hard material particles (227) in the region of these depressions (232) is lower than in superficial regions (263) of the traffic-carrying surface (232a) outside of these depressions (232).

20. Process according to Claim 19,
characterised by the use of a lower mould (248a) such that the traffic-carrying surface (232a) is substantially free from hard material particles (227) in the region of the depressions (232).

21. Process according to Claim 19 or 20,
characterised by the use of a lower mould (248a) such that the depressions (232) are formed as channels.

22. Process according to Claim 21,
characterised by the use of a lower mould (248a) such that the channels (232) open out in boundary surfaces of the moulded body (222).

23. Process according to Claim 21 or 22,
characterised by the use of a lower mould (248a) such that the channels (232) extend substantially in rectilinear fashion over the traffic-carrying surface (232a).

24. Process according to any one of Claims 21 - 23,
characterised by the use of a lower mould (248a) such that a plurality of, preferably two, groups of channels (232), which are parallel to one another in the respective group, are provided, wherein the channels (222) of the individual groups intersect.

25. Process according to any one of Claims 1 - 24,
characterised in that the traffic-carrying surface (232a) of the moulded body (222) is subjected to a roughening treatment after the curable moulding compound has been cured.

26. Process according to Claim 25,
characterised in that the roughening treatment is carried out by means of at least one metal wire brush (265), in particular by means of a rotating metal wire brush (265).

27. Process according to any one of Claims 1 to 26,
characterised in that a roughening aid (269) is introduced into the traffic-carrying surface of the moulded body (222) before this surface is cured, which aid has a lower strength of adhesion to the hard material particles (227) and to the cured moulding compound (254) than the hard material particles (227) to the cured moulding compound (254), wherein this roughening aid (269) is at least partly removed, if desired, after the moulding compound (254) has been cured.

28. Process according to Claim 27,
characterised in that the roughening aid (269) is strewn onto the bottom (249) of a lower mould (248a), onto which bottom the hard material particles (227) are also strewn simultaneously with or after the roughening aid (269) and before the curable moulding compound (254) is introduced.

## Revendications

1. Procédé de fabrication d'un corps moulé contenant un matériau en particules de vieux caoutchouc pour former une surface de circulation, notamment un dispositif de traversée d'une voie ferrée, dans lequel il est formé une couche (22y), proche de la surface du corps moulé exposée à la circulation, par durcissement d'une masse à mouler durcissable, et dans cette couche des particules (27) d'une matière dure sont introduites pour accroître la rugosité de la surface de circulation,
dans lequel entre une première surface de formage (48b), qui s'étend sur la surface du corps moulé exposée à la circulation, et une deuxième surface de formage (48a), devenant la surface du corps moulé éloignée de la circulation, la masse à mouler est mise sous pression et est durcie,
caractérisé
en ce que l'on introduit les particules (27) de matière dure dans la masse à mouler encore non durcie, en ce que l'on met sous pression, entre la première surface de formage (48b) et la deuxième surface de formage (48a), une couche de dispersion (27d) s'appliquant contre la première surface de formage (48b) et contenant des particules (27) de matière dure de forme et de disposition irrégulières, et une masse à mouler (50, 52, 54) s'appliquant contre la couche de dispersion (27d), et en ce qu'on lie les particules (27) de matière dure, ainsi introduites dans la masse à mouler (50, 52, 54), dans la couche (22y) proche de la surface du corps moulé exposée à la circulation et résultant de la masse à mouler, par durcissement de cette masse.

2. Procédé selon la revendication 1, caractérisé en ce qu'on utilise du caoutchouc brut vulcanisable comme liant pour la masse à mouler.

3. Procédé selon la revendication 1, caractérisé en ce qu'on utilise un liant thermoplastique, notamment à base de polyoléfines, comme liant de la masse à mouler.

4. Procédé selon l'une des revendications 1 à 3, caractérisé en ce qu'on utilise des particules (27) de matière dure qui sont recouvertes d'une couche (27a) d'un agent adhésif, notamment d'une couche (27a) d'un agent adhésif organique, par exemple d'une couche (27a) de colle de résine synthétique.

5. Procédé selon l'une des revendications 1 à 4, caractérisé en ce qu'on utilise, comme particules (27) de matière dure, des particules de corindon et/ou des particules de carbure métallique et/ou des particules de nitrure métallique et/ou des particules d'oxyde métallique.

6. Procédé selon l'une des revendications 1 à 5, caractérisé en ce qu'on utilise des particules (27) de matière dure d'une grosseur moyenne d'environ 0,5 mm à environ 4 mm.

7. Procédé selon l'une des revendications 1 à 6, caractérisé en ce que les particules (27) de matière dure sont incorporées de telle sorte qu'elles apparaissent librement à la surface exposée à la circulation et/ou ressortent de celle-ci, à l'état neuf, en tout cas après un usage de courte durée.

8. Procédé selon l'une des revendications 1 à 7, caractérisé en ce que l'on pourvoit les particules (27) de matière dure d'un agent adhésif organique et durcissable et on introduit les particules (27) de matière dure dans la masse à mouler dans un état dans lequel l'agent adhésif peut encore être lié dans la masse à mouler.

9. Procédé selon l'une des revendications 1 à 8, caractérisé en ce que l'on ajoute les particules (127) de matière dure à un matériau en particules de vieux caoutchouc, en ce qu'on mélange ensuite celui-ci avec un liant durcissable, en ce que le mélange ainsi obtenu est moulé pour donner le corps moulé ou au moins la couche (L) proche de la surface exposée à la circulation et en ce qu'on laisse durcir le liant.

10. Procédé selon l'une des revendications 1 à 8, caractérisé en ce qu'on ajoute et mélange les particules (127) de matière dure à un liant, en ce que l'on mélange ensuite celui-ci avec un matériau en particules de vieux caoutchouc, en ce qu'on moule le mélange ainsi obtenu et en ce qu'on laisse ensuite durcir le liant.

11. Procédé selon l'une des revendications 1 à 8, caractérisé en ce que l'on moule une masse à mouler pour donner le corps moulé ou une couche (54) proche de la surface exposée à la circulation du corps moulé, en ce qu'on répand ensuite les particules (27) de matière dure sur la surface exposée à la circulation et en ce qu'on laisse ensuite durcir le corps moulé, respectivement la couche.

12. Procédé selon la revendication 11, caractérisé en ce que l'on enfonce les particules (27) de matière dure, après leur épandage, dans une couche (54) proche de la surface exposée à la circulation et on laisse ensuite durcir cette couche.

13. Procédé selon la revendication 11 ou 12, caractérisé en ce qu'après épandage des particules (27) de matière dure et notamment après qu'elles ont été enfoncées dans la couche proche de la surface exposée à la circulation, on enlève une partie des particules de matière dure répandue.

14. Procédé selon l'une des revendications 11 à 13, caractérisé en ce que l'on recouvre une zone centrale d'un corps moulé, constitué d'un matériau de particules de vieux caoutchouc et d'un mélange de caoutchouc brut vulcanisable, d'une couche de caoutchouc brut vulcanisable, ce qui fait que la couche en caoutchouc brut vulcanisable constitue la surface exposée à la circulation, en ce qu'on répand ensuite les particules de matière dure sur la surface exposée à la circulation et, si on le souhaite, on enfonce les particules dans la surface exposée à la circulation et en ce qu'ensuite le mélange de caoutchouc brut vulcanisé est vulcanisé en même temps dans la zone centrale et dans la couche proche de la surface exposée à la circulation.

15. Procédé selon l'une des revendications 1 à 8, caractérisé en ce qu'on utilise un moule inférieur (248a) qui présente une surface de fond (249) dirigée verticalement vers le haut et des saillies (251) dirigées sur cette surface de fond vers le haut, en ce que l'on répand ensuite des particules (227) de matière dure sur cette surface de fond (249), de manière que ces particules (227) de matière dure se rassemblent sensiblement entre les saillies (251) sur la surface de fond et en ce qu'on introduit ensuite une masse à mouler durcissable dans le moule inférieur (248a) et en ce qu'on laisse durcir cette masse.

16. Procédé selon la revendication 15, caractérisé en ce qu'on soumet le moule inférieur (248a) à un mouvement de vibration de manière que les particules (227) de matière dure se rassemblent de préférence dans les zones situées à l'extérieur des saillies (251).

17. Procédé selon l'une des revendications 15 et 16, caractérisé en ce que l'on applique d'abord une couche de liant (254) sur le fond (249) du moule inférieur (248a), au-dessus des particules (227) de matière dure répandues, et on applique, au-dessus de cette couche de liant, un mélange (257) de liant (257b) et d'un matériau (257a) en particules de vieux caoutchouc, et on laisse durcir ce liant (257b) en même temps que le liant de la couche de liant (254).

18. Procédé selon l'une des revendications 15 à 17, caractérisé en ce que l'on met sous pression la masse à mouler (254, 257b), à l'intérieur du moule inférieur (248a), par introduction d'un moule supérieur (248b) dans le moule inférieur (248a).

19. Procédé selon l'une des revendications 15 à 18, caractérisé par l'utilisation d'un moule inférieur (248a) de manière à conférer au corps moulé des renfoncements (232), dans sa surface exposée à la circulation, et de manière que la concentration des particules (227) de matière dure soit inférieure dans la région de ces renfoncements (232) à ce qu'elle est dans les zones de surface (263) de la surface (232a) exposée à la circulation, a l'extérieur de ces renfoncements (232).

20. Procédé selon la revendication 19, caractérisé par l'utilisation d'un moule inférieur (248a) de manière que la surface (232a) exposée à la circulation ne contienne pratiquement pas de particules (227) de matière dure dans la région des renfoncements (232).

21. Procédé selon la revendication 19 ou 20, caractérisé par l'utilisation d'un moule inférieur (248a) de manière que les renfoncements (232) soient réalisés sous la forme de rigoles.

22. Procédé selon la revendication 21, caractérisé par l'utilisation d'un moule inférieur (248a) de manière que les rigoles (232) débouchent dans les surfaces de bordure du corps moulé (222).

23. Procédé selon la revendication 21 ou 22, caractérisé par l'utilisation d'un moule inférieur (248a) de manière que les rigoles (232) s'étendent sensiblement en ligne droite sur la surface (232a) exposée à la circulation.

24. Procédé selon l'une des revendications 21 à 23, caractérisé par l'utilisation d'un moule inférieur (248a) de manière que soient prévus plusieurs groupes, de préférence deux, de rigoles (232) parallèles entre elles dans chaque groupe, les rigoles (232) des différents groupes se croisant.

25. Procédé selon l'une des revendications 1 à 24, caractérisé en ce que l'on soumet la surface (232a) soumise à la circulation du corps moulé (222) à un traitement destiné à la rendre rugueuse, après durcissement de la masse à mouler durcissable.

26. Procédé selon la revendication 25, caractérisé en ce que le traitement de rugosité est effectué au moyen d'une brosse à fils métalliques (265), notamment au moyen d'une brosse à fils métalliques (265) rotative.

27. Procédé selon l'une des revendications 1 à 26, caractérisé en ce qu'avant le durcissement de la surface du corps moulé (222) soumise à la circulation, on introduit dans celle-ci un agent (269) favorisant la rugosité, qui présente, par rapport aux particules (227) de matière dure et par rapport à la masse à mouler (254) durcie, un pouvoir adhésif moindre que les particules (227) de matière dure par rapport à la masse à mouler (254) durcie, cet agent (269) favorisant la rugosité étant au moins partiellement enlevé, si on le souhaite, après durcissement de la masse à mouler (254).

28. Procédé selon la revendication 27, caractérisé en ce qu'on répand l'agent (269) favorisant la rugosité sur le fond (249) d'un moule inférieur (248a) sur lequel les particules (227) de matière dure sont répandues aussi simultanément à ou après l'agent (269) favorisant la rugosité, et avant l'introduction de la masse à mouler (254) durcissable.
